(19) Europäisches Patentamt
European Patent Office
Office européen des brevets

(11) **EP 1 032 193 B1**

(12) **EUROPEAN PATENT SPECIFICATION**

(45) Date of publication and mention
of the grant of the patent:
**15.04.2009 Bulletin 2009/16**

(51) Int Cl.:
**H04N 1/409** *(2006.01)*

(21) Application number: **00103998.1**

(22) Date of filing: **25.02.2000**

(54) **Apparatus and method for image correction**

Verfahren und Vorrichtung zur Bildkorrektur

Procédé et appareil pour la correction d'image

(84) Designated Contracting States:
**DE FR GB**

(30) Priority: **26.02.1999 JP 5140699**

(43) Date of publication of application:
**30.08.2000 Bulletin 2000/35**

(73) Proprietor: **Sharp Kabushiki Kaisha
Osaka 545-8522 (JP)**

(72) Inventor: **Yamada, Masanori
Ikoma-shi,
Nara (JP)**

(74) Representative: **Müller - Hoffmann & Partner
Patentanwälte
Innere Wiener Strasse 17
81667 München (DE)**

(56) References cited:
**EP-A- 0 223 601       EP-A- 0 673 152
EP-A- 0 744 861       US-A- 5 023 919
US-A- 5 293 579       US-A- 5 396 584**

• YAO WANG ET AL: "IMAGE SMOOTHING BASED
ON LOCAL IMAGE MODELS" INTERNATIONAL
CONFERENCE ON SYSTEMS ENGINEERING,US,
NEW YORK, IEEE, vol. -, 1989, pages 81-83,
XP000089020

**Description**

BACKGROUND OF THE INVENTION

1. Field of the Invention

The present invention relates to an apparatus and method for correcting images, an apparatus and method for processing images and a medium for storing an image correcting process and an image processing control program used in a hardcopy apparatus for reproducing so-called multilevel gray scale images.

2. Description of the Related Art

So-called hardcopy apparatuses for reproducing images represented by image data are provided in printing portions of so-called digital copiers or in printers. Recently, in order to improve the quality of images from hardcopy apparatus, efforts are being put on development of techniques to increase the resolution of images reproduced by such apparatuses and to render images reproduced by such apparatuses with multiple gray levels, and various image processing techniques associated with such techniques are also under development. Especially, the so-called gray scale processing technique is an important technique which is essential in reproducing images with smooth transition of density, i.e., in producing hardcopies of such images. For example, images with smooth transition of density are photographs or natural images.

An image reproduced by a common hardcopy apparatus is formed of a plurality of pixels in a predetermined number of gray levels. Density steps referred to as "false contours" are more likely to appear in an image reproduced by such a hardcopy apparatus, the smaller the number of the gray levels of pixels, which significantly reduces the quality of the reproduced image. Such false contours appear at the boundary between two pixel regions having different densities in the reproduced image. Such a pixel region is a part of the image and is formed of at least one pixel having an equal density.

An article "Method for Differential Block Encoding of Halftone Facsimile Signal - Encoding Efficiency and Image Quality" (by Makoto Kobayashi and Yutaka Suzuki, IEICE Technical Report IE81-69) has disclosed a technique for reducing noticeability of false contours in an image reproduced based on a halftone facsimile signal utilizing the differential block method. According to the article, a receiver for receiving the halftone facsimile signal disperses pixels located at a boundary between certain pixel regions of an image or located in the vicinity of the same in other pixel regions adjacent to the pixel regions when it reproduces the image based on the signal. According to Japanese Unexamined Patent Publication JP-A 61-194977 (1986), as shown in Fig. 11, two pixel regions 3 and 4 having different densities are formed such that each other's pixels are interleaved with one another in order to make any false contour in the multilevel gray scale image less noticeable. As a result, a boundary 5 between two pixel regions has an irregular configuration.

As described above, when the technique described in the article IE81-69 is implemented, the process of dispersing pixels in the vicinity of a boundary tends to become complicated. When the technique described in JP-A 61-194977 is implemented, the process of forming the boundary 5 in the irregular configuration tends to become complicated. As a result, each of the above-described two techniques increases the burden of image processing to a hardcopy apparatus utilizing the same beyond the burden of image processing to a conventional hardcopy apparatus which does not carry out the above-described process of suppressing false contours. Therefore, the processing time spent by the hardcopy apparatus utilizing each of the two techniques for carriying out the image processing is longer than the processing time spent by the conventional hardcopy apparatus for the image processing. An attempt to reduce the processing time spent by the hardcopy apparatus utilizing each of the two techniques for the image processing can result in an increase in the cost of the hardcopy apparatus because it necessitates the use of a high performance image processor. Further, when each of the two techniques is used to correct an image, an unnatural pattern which is not seen on the image before correction appears at a boundary between pixel regions in the image and in the vicinity of the boundary.

SUMMARY OF THE INVENTION

It is an object of the invention to provide an apparatus and method for correcting an image, capable of suppressing false contours in an image and preventing the occurrence of an unnatural pattern associated with a process for suppressing such false contours, a medium for storing an image correction control program, an apparatus and method for processing an image, capable of reducing a burden associated with the process for suppressing false contours in an image and a medium for storing an image processing control program.

In a first aspect of the invention there is provided an image correcting apparatus comprising:

boundary detecting means configured to detect a boundary between a plurality of regions, consisting of pixels having a reflection density which is equal or greater than a predetermined lower limit of reflection density difference, in an image to be processed. The image correcting apparatus further comprises a density exchange means configured to exchange densities of pixels between two exchange-object regions which are located symmetrically to each other with respect to the boundary detected by the boundary detecting means, each of the exchange-object regions having a predetermined width, one end of which is located at the boundary.

According to the first aspect of the invention, the image correcting apparatus exchanges the densities of a plurality of pixels each of which is located in the vicinity of a boundary in the processing-object image and which are located symmetrically about the boundary. As a result, the number of false contours in the image after the density exchange is reduced from the number of false contours in the processing-object image before the density exchange. The image correcting apparatus is therefore capable of suppressing false contours in a processing-object image. Since exchange-object regions are defined as described above, the image correcting apparatus has a reduced burden in carrying out the process of suppressing false contours when compared to an image correcting apparatus according to the prior art for carrying out the process of suppressing false contours, i.e., an image correcting apparatus utilizing the technique as described in the report IE81-69 or JP-A 61-194977. Further, since the exchange-object regions have a configuration as described above, an image processed by the image correcting apparatus according to the invention is less subjected to the occurrence of so-called jaggy attributable to the process of suppressing false contours and the generation of patterns attributable to the process which are not present on the image before the process than an image processed by an image correcting apparatus according to the prior art as described above.

According to the first aspect of the invention, the image correcting apparatus detects a boundary in the processing-object image and exchanges the densities of pixels in two exchange-object regions one end of which in the direction of the width thereof is defined by the boundary in a symmetrical manner with the boundary serving as the axis of symmetry. As a result, the image correcting apparatus makes it possible to suppress false contours in a processing-object image reliably while reducing the burden associated with the process of suppressing false contours.

In a second aspect of the invention number of pixels in the exchange-object regions of a color processing-object image is equal to or greater than number of pixels in the exchange-object regions of a monochromatic processing-object image.

According to the second aspect of the invention, the image correcting apparatus includes a configuration similar to that of the image correcting apparatus of the first aspect, and the number of pixels in the exchange-object regions is as described above. The burden of the process associated with the suppression of false contours decreases with the number of pixels in the exchange-object regions. As a result, the image correcting apparatus is capable of reliably suppressing false contours in a processing-object image depending on whether the image is a color image or monochromatic image with a reduced burden associated with the process of suppressing false contours.

In a third aspect of the invention the greater the number of pixels in the exchange-object regions is, the higher the resolution of the processing-object image.

According to the third aspect of the invention, the image correcting apparatus of the invention has a configuration similar to that of the image correcting apparatus of the first aspect of the invention, and the number of pixels in the exchange-object regions is as described above. The burden of the process associated with the suppression of false contours carried out by the image correcting apparatus according to the third aspect of the invention decreases with the number of pixels in the exchange-object regions. As a result, the image correcting apparatus according to the third aspect of the invention is capable of reliably suppressing false contours in a processing-object image depending on the resolution of the image with a reduced burden associated with the process for suppressing false contours.

In a fourth aspect of the invention, there is provided an image processing apparatus comprising an image correcting apparatus. The image processing apparatus further comprises density difference calculation means configured to calculate a reflection density difference between pixels adjacent to each other in the image; and correction control means configured to cause correction means to exchange the densities of pixels between the two exchange-object regions only on a pixel whose reflection density difference is equal to or greater than a predetermined lower limit and prohibiting the correction means from exchanging the densities of pixels between the two exchange-object regions on a pixel whose reflection density difference is smaller than the lower limit, wherein the lower limit is a minimum value of reflection density differences of pixels between two pixel regions in which false contours can be recognized.

According to the fourth aspect of the invention, the correction control means causes the correction means for carrying out a correction process for suppressing false contours in a processing-object image to operate based on the relationship between the magnitudes of the above-described reflection density difference and the lower limit of reflection density difference. As a result, the burden associated with the process of the correction means is smaller than the burden associated with the process of connection means in a conventional image processing apparatus. The image processing apparatus is therefore capable of suppressing false contours in a processing-object image, and the processing time required for the processing of suppressing false contours can be shorter than that of an image processing apparatus according to the prior art.

In a fifth aspect of the invention the lower limit of reflection density difference is 0.003.

According to the fifth aspect of the invention, the image processing apparatus has the same configuration as that of the image processing apparatus according to the fourth aspect, and the lower limit of reflection density difference is the above described value. The reason is as follows. When the lower limit of reflection density difference is 0.003, it is difficult for a tester to recognize with his or her eyes whether any false contour appears at a boundary between two pixel regions each including two pixels for which the reflection density difference is smaller than the lower limit of reflection density difference and in the vicinity of the boundary. It is therefore expected that there is small possibility of a reduction of image quality attributable to the occurrence of false contours at the boundary and in the vicinity of the same whether the process of the correction means is carried out or not on pixels in the vicinity of the boundary between the two pixel regions in the above-described situation. Therefore, by carrying out the correction process only on pixels for which the reflection density difference is 0.003 or more, the image processing apparatus according to the fourth aspect of the invention can suppress false contours in the processing-object image with a sufficient reduction of the processing time required for the process of suppressing false contours.

In a sixth aspect of the invention the lower limit of reflection density difference is 0.005.

According to the sixth aspect of the invention, the image processing apparatus has the same configuration as that of the image processing apparatus according to the fourth aspect, and the lower limit of reflection density difference is the above-described value. The reason is as follows. When the lower limit of reflection density difference is 0.005, false contours are almost unrecognizable to human eyes at a boundary between two pixel regions each including two pixels for which the reflection density difference is smaller than the lower limit of reflection density difference and in the vicinity of the boundary. It is therefore expected that there is substantially no reduction of image quality attributable to the occurrence of false contours at the boundary and in the vicinity of the same whether the process of the correction means is carried out or not on pixels in the vicinity of the boundary between the two pixel regions in the above-described situation. Therefore, by carrying out the correction process only on pixels for which the reflection density difference is 0.005 or more, the image processing apparatus according to the fifth aspect of the invention can suppress false contours in the processing-object image with a sufficient reduction of the processing time required for the process of suppressing false contours.

In a seventh aspect of the invention the correction control means prohibit the correction means from carrying out the process on pixels the reflection density difference of which from the adjacent pixel exceeds a predetermined upper limit of reflection density difference greater than the lower limit reflection density difference and the upper limit of reflection density difference is a maximum value among reflection density differences between pixels in two pixel regions in which no false contour is recognized in an image which has been subjected to the correction process by the correction means.

According to the seventh aspect of the invention, the image processing apparatus has the same configuration as that of the image processing apparatus according to the fourth aspect of the invention, and the correction control means carries out the above-described process. As a result, the correction control means operates only when the reflection density difference is within a range that is equal to or greater than the lower limit of reflection density difference and is equal to or smaller than the upper limit of reflection density difference. The reason is as follows. Since the upper limit of reflection density difference is defined as described above, when a reflection density difference exceeds the upper limit of reflection density, it is expected that sufficient suppression of false contours in an image will be difficult even if the correction means carries out the process on the processing-object image. Therefore, the process of the correction means is carried out only when the reflection density difference is within the above-described range, i.e., when the process of the correction means can suppress false contours. As a result, the image processing apparatus according to the seventh aspect of the invention can suppress false contours in a processing-object image with a further reduction in the processing time required for the process of suppressing false contours.

In an eighth aspect of the invention the upper limit of reflection density difference is 0.015.

According to the eighth aspect of the invention, the image processing apparatus has the same configuration as that of the image processing apparatus according to the seventh aspect of the invention, and the upper limit of reflection density difference is the above-described value of 0.015. This is based on an expectation that it will be difficult for the correction process to suppress false contours generated between two pixel regions each including two pixels for which the reflection density difference is equal to or greater than the upper limit of reflection density difference. As a result, the image processing apparatus according to the eighth aspect of the invention can suppress false contours in a processing-object image with a further reduction in the processing time required for the process of suppressing false contours.

In a ninth aspect of the invention the image processing apparatus further comprises:

relationship storing means for storing a relationship between a reflection density of a pixel and a predetermined gray level to be related to the reflection density of the pixel;
image data input means for inputting image data representing a processing-object image and including a gray level of each pixel in the processing-object image; and

reflection density conversion means for converting the gray level of at least any one pixel in the image data into a reflection density based on contents stored in the relationship storing means,

wherein the reflection density difference calculation means uses image data converted into gray levels.

According to the ninth aspect of the invention, the image processing apparatus has the same configuration as that of the image processing apparatus according to the fourth aspect of the invention. The image processing apparatus further includes a configuration for identifying the reflection density of a pixel from image data and substitutes reflection densities for gray levels in the image data representing the processing-object image prior to the calculation of the reflection density. This is because an image processing apparatus processes image data rather than processing an image directly and that the difference between the gray levels of two pixels is not equivalent to the difference between the reflection densities of the two pixels because the gray levels and reflection densities are not proportionate in most cases. As a result, the image processing apparatus for processing image data can suppress false contours in a processing-object image and can reduce the processing time required for the process of suppressing false contours easily.

In a tenth aspect of the invention the correction means is an image correcting apparatus according to any of the first through third aspects of the invention.

According to the tenth aspect of the invention, the image processing apparatus has the same configuration as that of the fourth aspect of the invention, and the correction means has the above-described configuration. As a result, the image processing apparatus can reliably suppress false contours in a processing-object image and can reduce the burden of the process eliminating the false contours and the processing time of the process.

In an eleventh aspect of the invention, there is provided a method for correcting an image, comprising the step of detecting a boundary between a plurality of regions each consisting of pixels having a reflection density which is equal or greater than a predetermined lower limit of reflection density difference in an image to be processed and further comprising the step of exchanging densities of pixels between two exchange-object regions which are located symmetrically to each other with respect to the detected boundary, each of the exchange-object regions having a predetermined width, one end of which is located at the boundary.

According to the eleventh aspect of the invention, in the image correcting method for suppressing false contours in a processing-object image, after a boundary in the image is detected, the densities of pixels in two exchange-object regions one end of which in the direction of the width thereof is defined by the boundary are exchanged each symmetrically about the boundary serving as an axis of symmetry. As a result, the use of the image correcting method makes it possible to Reduce false contours in a processing-object image easily and to reduce the burden to an apparatus which carries out the image correcting method for the same reasons as in the first aspect of the invention.

In a twelfth aspect of the invention, there is provided an image processing method including the method for correcting an image. The image processing method further comprises the steps of calculating a reflection density difference between pixels adjacent to each other in an image to be processed, and exchanging the densities of the pixels between the two exchange-object regions only on a pixel whose reflection density difference is equal to or greater than a predetermined lower limit and prohibiting the correction process from being carried out on a pixel whose reflection density difference is smaller than the lower limit, wherein the lower limit is a minimum value of reflection density differences of pixels between in two pixel regions in which false contours can be recognized.

According to the twelfth aspect of the invention, in the image processing method associated with the suppression of false contours in a processing-object image, the correction process for suppressing false contours in an image is carried out only on pixels for which the reflection density difference from the adjacent pixel is equal to or greater than the lower limit of reflection density difference. As a result, the use of the image processing method makes it possible to suppress false contours in a processing-object image with the processing time required for the process of suppressing false contours reduced from that in the prior art for the reasons as described with reference to the fourth aspect of the invention.

In a thirteenth aspect of the invention, there is provided a medium on which is stored a computer program of image correction control, wherein the computer program causes the computer to perform the step of detecting a boundary between a plurality of regions each consisting of pixels having a reflection density which is equal or greater than a predetermined lower limit of reflection density difference, in the image to be processed. The computer program causes the computer to perform the step exchanging densities of pixels between exchange-object regions which are located symmetrically to each other with respect to the detected boundary, each of the exchange-object regions having a predetermined width one end of which is located at the boundary.

According to the thirteenth aspect, the computer program for image correction control stored on the medium is installed in a computer and is thereafter executed by the computer. As a result, the computer operates similarly to the image correcting apparatus described in the first aspect of the invention. This makes it possible to reduce false contours in a processing-object image easily using a general purpose computer and to reduce the burden to the computer associated with the process for reducing false contours.

In a fourteenth aspect of the invention, there is provided a medium on which is stored a computer program of image processing control comprising the computer program of image correction control. The computer program causes the computer to perform the steps of calculating a reflection density difference between pixels adjacent to each other in the image, and exchanging the densities of the pixels between two exchange-object regions only on pixels whose reflection density difference is equal to or greater than a predetermined lower limit and prohibiting the predetermined correction process from being carried out on pixels whose reflection density difference is smaller than the lower limit, wherein the lower limit is a minimum value of reflection density differences of pixels between in two pixel regions in which false contours can be recognized.

According to the fourteenth aspect of the invention, an image processing control program in the medium is installed in a computer and is thereafter executed by the computer. As a result, the computer operates similarly to the image correcting apparatus described in the fourth aspect of the invention. This makes it possible to suppress false contours in a processing-object image easily using a general purpose computer and to reduce the time of the process for reducing false contours.

BRIEF DESCRIPTION OF THE DRAWINGS

Other and further objects, features, and advantages of the invention will be more explicit from the following detailed description taken with reference to the drawings wherein:

Fig. 1 is a block diagram showing an electrical configuration of an image forming apparatus 21 including an image processing apparatus 24 which is a first embodiment of the invention;
Fig. 2 is a block diagram of a mechanical configuration of the image forming apparatus 21 in Fig. 1;
Fig. 3 is a partial enlarged view in the vicinity of a boundary B between two pixel regions RD1 and RD2 of an image I1 to be processed by a boundary processing portion 48 of the image processing apparatus 24;
Fig. 4 is a partial enlarged view in the vicinity of a boundary B in an image I2 to be processed which has been subjected to a boundary process according to the invention;
Fig. 5 is a partial enlarged view in the vicinity of a boundary B in an image I3 which has been subjected to the boundary process according to the invention in a case wherein the boundary B in the processing-object image is a diagonal straight line when viewed macroscopically;
Fig. 6 is a partial enlarged view in the vicinity of the boundary B in the image I3 which has been subjected to the boundary process according to the invention in a case wherein the boundary B in the processing-object image is a curve when viewed macroscopically;
Fig. 7 is a partial enlarged view in the vicinity of the boundary B in the image I3 which has been subjected to the boundary process according to the invention in a case wherein the boundary B in the processing-object image is a contour when viewed macroscopically;
Fig. 8A shows a reference image used for evaluation and testing on the boundary process according to the invention, Fig. 8B is a partial enlarged view of the reference image, Fig. 8C is a partial enlarged view of an image obtained by carrying out a boundary process according to the prior art on the reference image and Fig. 8D is a partial enlarged view of an image obtained by carrying out the boundary process according to the invention on the reference image;
Fig. 9 is a diagram showing a relationship between gray levels and reflection densities of the reference image in Figs. 8A, 8B, 8C and 8D;
Fig. 10 is a flow chart showing a first processing procedure of a boundary process at a boundary processing portion of an image processing apparatus which is a second embodiment of the invention; and

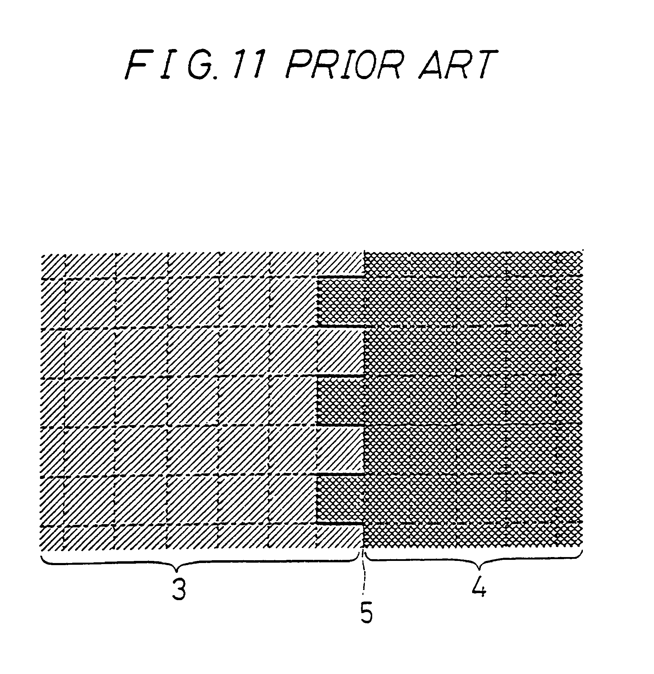

Fig. 11 is a partial enlarged view in the vicinity of a boundary 5 in an image which has been subjected to a boundary process according to the prior art.

DETAILED DESCRIPTION OF THE PREFERRED EMBODIMENTS

Now referring to the drawings, preferred embodiments of the invention are described below.

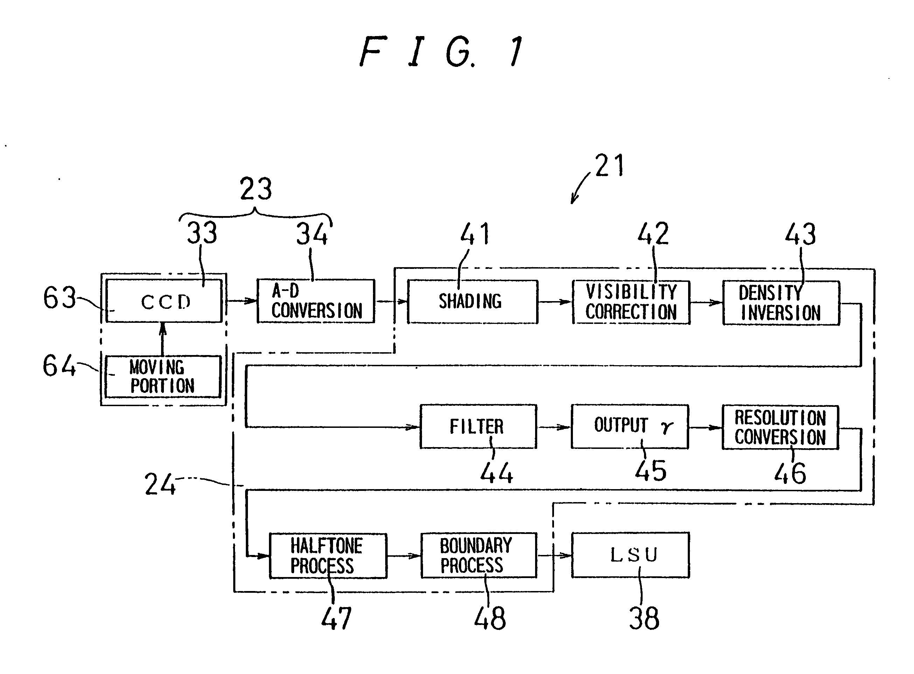

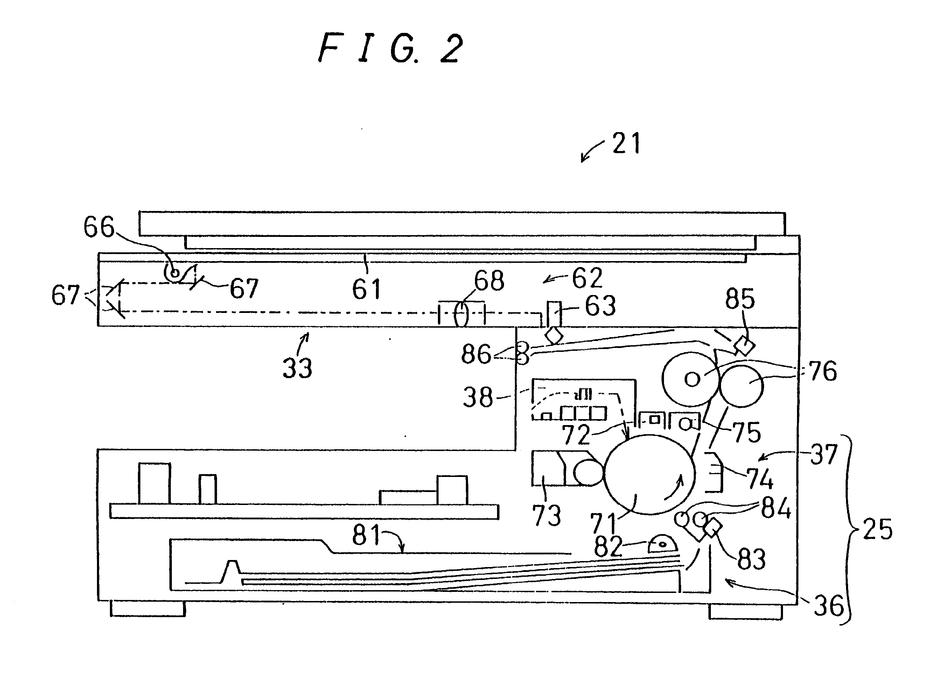

Fig. 1 is a block diagram showing an electrical configuration of an image forming apparatus 21 including an image processing apparatus 24 which is an embodiment of the invention. Fig. 2 is a block diagram showing a mechanical configuration of the image forming apparatus 21 in Fig. 1. Figs. 1 and 2 will now be described in conjunction with each other. The image forming apparatus 21 is a so-called digital copier.

The image forming apparatus 21 includes an image input apparatus 23, an image processing apparatus 24 and an image output apparatus 25. The image input apparatus 23 generates image data to be processed by the image processing apparatus 24. The image data is a set of digital data representing an image. The image processing apparatus 24 carries out various processes on the image data to be processed to improve the quality of the image represented by the image data. One of the various processes is a boundary process for suppressing false contours in an image. The image output apparatus 25 reproduces an image represented by image data which has been subjected to the various processes.

For example, the image input apparatus 23 includes a reader 33 and an A-D converter 34. The reader 33 generates an analog signal representing an image, i.e., an analog image signal. The A-D converter 34 quantizes the analog image signal obtained by the reader 33. Since the analog image signal is thus subjected to analog-to-digital conversion, the image data is obtained. The image input apparatus 23 is not limited to the combination of the reader 33 and A-D converter 34 as long as it is an apparatus capable of generating image data, and it may be a different apparatus, e.g., a computer capable of generating image data directly.

For example, the image output apparatus 25 includes a transport apparatus 36 and a printer 37. The transport apparatus 36 transports a printing medium on which an image represented by the image data is to be printed to supply it to the printer 37. In the present embodiment, the printing medium is recording paper. The printer 37 prints the image represented by the image data on the recording paper supplied thereto based on the image data which has been subjected to the various processes. In the present embodiment, the printer 37 is a so-called electrophotographic printer which includes a laser scanning unit (hereinafter briefly referred to as "LSU") 38. The LSU 38 radiates laser light in accordance with the processed image data. The printer is not limited to the electrophotographic system, and any other system, e.g., an inkjet system may be used. The image output apparatus 25 is not limited to the combination of the transport apparatus 36 and printer 37, and it may be a different apparatus, e.g., a display apparatus utilizing any one of a cathode ray tube, a liquid crystal display element and an EL display element. When the image processing apparatus is used in combination with a display apparatus such as a television receiver, brightness is corrected instead of density using a method similar to the method described in this specification.

From a functional point of view, the image processing apparatus 24 includes a shading portion 41, a visibility correcting portion 42, a density inverting portion 43, a filter portion 44, an output $\gamma$ correcting portion 45, a resolution converting portion 46, a halftone processing portion 47 and a boundary processing portion 48. Specific configurations of the shading portion 41, ..., halftone processing portion 47 will be described later. The boundary processing portion 48 carries out the above-described boundary process on image data output by the halftone processing portion 47, i.e., image data from the image input apparatus 23 which has been subjected to the processes at the shading portion 41, ..., halftone processing portion 47.

All of the portions 41 through 48 in the image processing apparatus 24 are functional features in the image processing apparatus 24, each of them may be implemented in the form of an arithmetic process in an arithmetic circuit provided in the image processing apparatus 24 or may be implemented in the form of an electronic circuit for executing the process at the respective portion. It is obviously possible to implement at least one of the portions 41 through 48 of the image processing apparatus 24 in the form of an arithmetic process in an arithmetic circuit and to implement the rest of the portions 41 through 48 in the form of electronic circuits. For example, the arithmetic circuit may be a CPU (central processing unit) or a DSP (digital signal processor).

The image data is composed of pixel data sets corresponding to a plurality of pixels which form the image, which data sets represent colors of the corresponding pixels. When the image is a monochromatic image, the value or gray level of each pixel data is a numerical value representing an achromatic reflection density of the pixel associated with the pixel data. When the image is a color image, the pixel data includes a plurality of predetermined components defined in accordance with a predetermined color system to represent a combination of brightness, saturation and hue of the pixel. In this case, when the plurality of components represent the densities of a plurality of colors defined in accordance with the color system, the plurality of components in the pixel data are respectively associated with the plurality of colors, and the value or gray level of each of the plurality of components is a numerical value that indicates the reflection density of the color associated with the component.

The relationship between the gray levels and reflection densities is defined in advance depending on the specifications of the image forming apparatus 21. The range in which the gray levels can reside, i.e., the effective range of the gray levels is defined in advance depending on the specifications of the image forming apparatus 21. In the present embodiment, pixel data of a single pixel is a data set of eight bits, and the effective range of the gray levels is from 0 to 255 inclusive. The higher the gray level of image data supplied to the boundary processing portion 48, the higher the reflection density associated with the gray level. That is, the higher the gray level, the darker the pixel. In the following description, image data represent a monochromatic image unless otherwise specified.

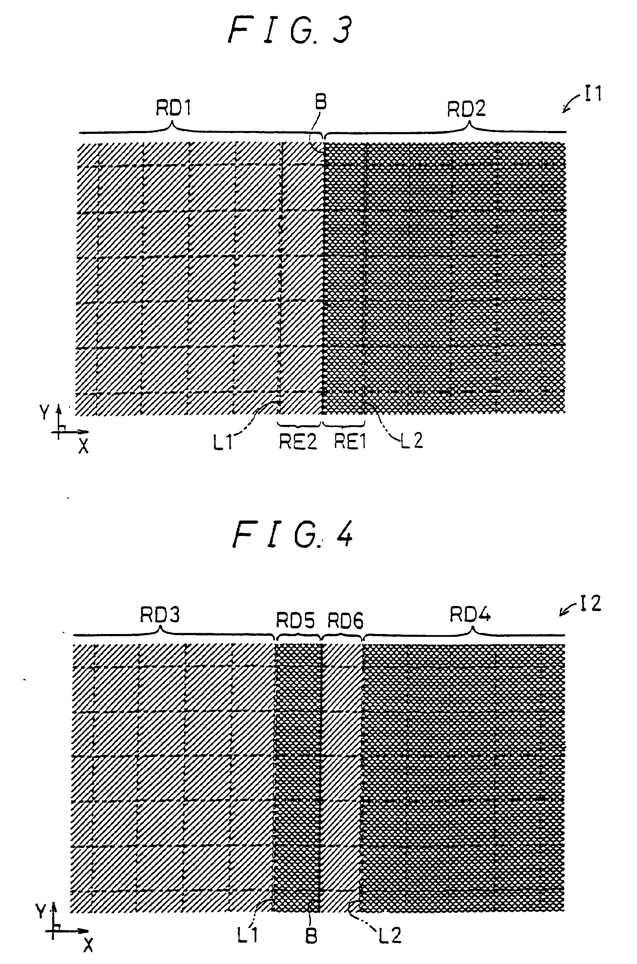

The boundary process at the boundary processing portion 48 will now be described with reference to Figs. 3 through 7. Fig. 3 is an enlarged schematic view of a part of an image I1 represented by image data to be processed before the boundary process (hereinafter referred to as "object image") including a boundary B between two pixel regions RD1 and RD2. The object image I1 is obtained by expanding the image data to be processed and is constituted by a plurality of pixels. In the present embodiment, the plurality of pixels are arranged in the form of a matrix in which a group of pixels arranged in the horizontal direction X of the figure are collectively referred to as "a row" and in which a group of pixels arranged in the vertical direction Y of the figure are collectively referred to as "a column". An arbitrary pixel region is a part of the image and is formed of at least one pixel. All pixels in a single pixel region are equal to each other in reflection density, or all of differences between the pixels in the single pixel region are equal to or greater than 0 and smaller than a predetermined threshold. That is, a single pixel region includes only pixels having gray levels which are substantially equal to each other. In the context of the present specification, a single quadrangle whose four sides are represented by dotted lines in the enlarged schematic view of a part of an image corresponds to a single pixel, and the reflection density of pixel corresponding to the quadrangle increases with the number of the slant lines shown in the quadrangle. As described above, the boundary process is a process for suppressing false boundary in the object image I1. It has been found that such false boundary appear at a boundary B between two pixel regions RD1 and RD2 having different reflection densities and in the vicinity of the boundary.

Briefly, the boundary process is carried out according to the following procedure. The boundary processing portion 48 carries out a boundary detecting process after image data to be processed are supplied from the halftone processing portion 47. The boundary detecting process will be detailed later. As a result, a boundary B between pixel portions in the object image I1 is detected from the object image I1 represented by the image data to be processed. After the boundary is detected, the boundary processing portion 48 carries out a density exchange process on pixels in the vicinity of the detected boundary B. Briefly, the density exchange process is a process of exchanging the densities of pixels in two exchange-object regions RE1 and RE2 respectively set on both sides of the boundary B between the two pixel regions RD1 and RD2 in the object image I1 symmetrically about the boundary B. When viewed macroscopically, each of the two exchange-object regions RE1 and RE2 is a region which is in parallel with the boundary B in the longitudinal direction thereof and which has a predetermined width, one end of the region in the direction of the width thereof being defined by the boundary B.

The density exchange process will now be described specifically. Since the gray levels of pixel data are associated with reflection densities as described above, the exchange of the densities of two pixels is carried out by exchanging the gray scale data among the pixel data of the two pixels. Specifically, after the detection of the boundary, the boundary processing portion 48 exchanges the gray scale data of pixels which are located in one of the pixel regions RD1 at the boundary B between the two pixel regions RD1 and RD2 and whose positional relationship with the boundary B are equal to at least one predetermined reference positional relationship with the gray scale data of pixels which are located in the other pixel region RD2 of the two pixel regions and whose positional relationship with the boundary B is equal to the reference positional relationship. The pixels to be subjected to gray scale data exchange in each of the pixel regions RD1 and RD2 are arranged in a predetermined number (hereinafter referred to as "reference number of pixels") in a direction orthogonal to the boundary B from an end thereof which is at least one pixel adjacent to the boundary B. The reference number of pixels is a natural number which is equal to or greater than 1. When the reference number of pixels is equal to or greater than 2, the gray level of one arbitrary pixel in the region RE1 to be exchanged in one pixel region RD1 is exchanged with the gray level of the pixel which is located in the other pixel region RD2 and which is spaced from the boundary B by the same distance as the distance from the arbitrary pixel to the boundary B.

For example, when the boundary B is a line segment in parallel with the columns of pixels as shown in Fig. 3, the two regions RE1 and RE2 to be exchanged are regions defined between the boundary B and imaginary lines L1 and L2 obtained by translating the boundary B which is a line segment in a direction orthogonal to the longitudinal direction of the boundary B, i.e., a direction in parallel with the rows of pixels by the width of the pixels in the reference number of pixels. That is, the two regions RE1 and RE2 to be exchanged correspond to two columns which are adjacent to each other with the boundary B between them. Therefore, when the boundary process is carried out on the image I1 shown in Fig. 3, a processed image I2 as shown in Fig. 4 is obtained. The description on the exchange-object regions in the case wherein the boundary B is a line segment in parallel with the columns of pixels equally applies to the regions RE1 and RE2 to be exchanged in the case wherein the boundary B is a line segment in parallel with the rows of pixels except that terms "rows" and "columns" are to be replaced with each other.

In the processed image I2, two second pixel regions RD5 and RD6 having gray levels different from those of first pixel regions RD3 and RD4 intervene between the two first pixel regions RD3 and RD4 and the boundary B respectively. The two second pixel regions RD5 and RD6 are a result of the exchange of the reflection densities of the pixels in the two regions RE1 and RE2 to be exchanged. Therefore, the two second pixel regions RD5 and RD6 are congruent with the two regions RE1 and RE2 to be exchanged, are located in the same positions as the same and are formed of pixels having the reflection densities as those of other first pixel regions RD4 and RD3 which are located on the other side of the boundary B as viewed from the first pixel regions RD3 and RD4. Accordingly, the two first pixel regions RD5 and RD6 in the processed image I2 are congruent with the pixel regions RD1 and RD2 in the unprocessed image I1 minus the regions RE1 and RE2 to be exchanged.

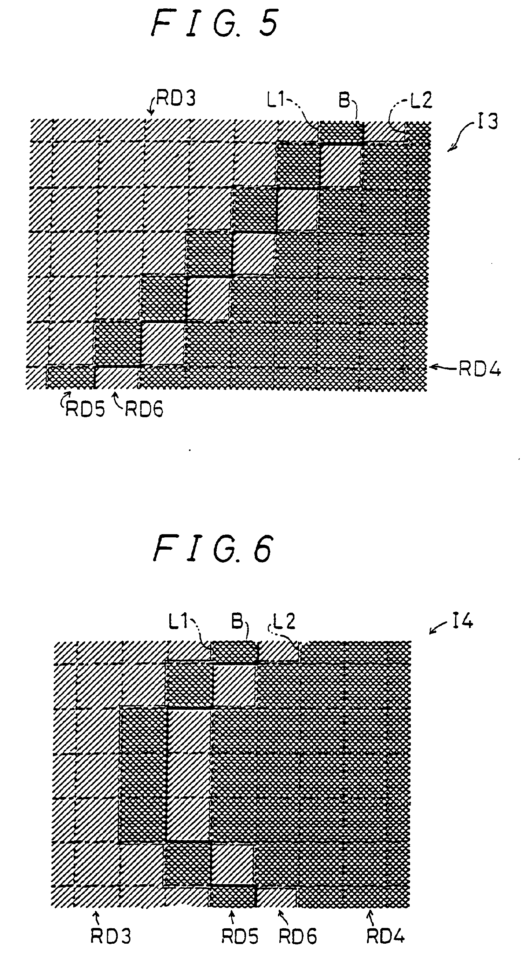

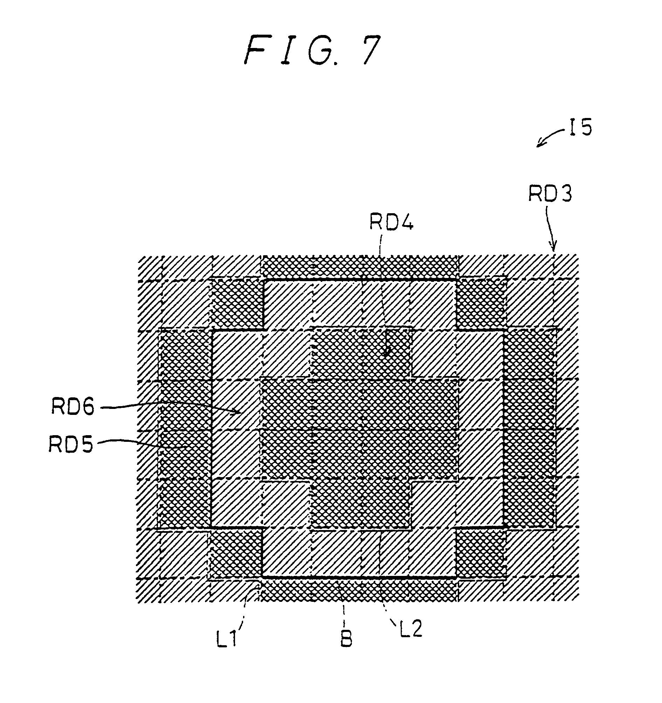

The boundary B is not limited to a straight line in parallel with the rows or columns of pixels and may be any of a curve, a contour or a straight line at an angle to the rows and columns of pixels when the unprocessed image I1 is viewed macroscopically. For example, when the boundary B is a line segment which extends diagonally when viewed macroscopically, a processed image I3 as shown in Fig. 5 will be obtained. For example, when the boundary B is a curve when viewed macroscopically, a processed image I4 as shown in Fig. 6 will be obtained. In those two cases, as shown in Figs. 5, 6, the boundary B are polygonal lines extending along boundaries of between pixels. In the processed images I3 and I4 in those cases, therefore, the two second pixel regions RD5 and RD6 are regions between the boundary B and imaginary lines L1 and L2 defined by translating the boundary B which is a polygonal line in a direction in parallel with the rows or columns of pixels by the width of pixels in the reference number of pixels. For example, when the boundary B is a contour, a processed image I5 as shown in Fig. 7 will be obtained. In the processed image I5 in this case, the two second pixel regions RD5 and RD6 are regions between the boundary B and imaginary lines L1 and L2 defined by respectively reducing and enlarging the boundary B which is a contour in directions inward and outward of the contour by the width of the pixels in the reference number of pixels. In Figs. 4 through 7, the reference number of pixels is 1. The density exchange process has now been described.

The process of detecting a boundary in an object image carried out by the boundary processing portion 48 is as follows. For example, the boundary detecting process is implemented as a so-called edge detecting process. Therefore, when image data to be processed are supplied, the boundary processing portion 48 makes a judgement on all pixels in the object image represented by the image data whether any part of a boundary B exists between each of the pixels and another pixel adjacent to the same pixel. Whether any part of the boundary B exists between one arbitrary pixel in the object image and a pixel adjacent to the same pixel is judged based on the relationship between the magnitudes of the difference between the gray levels of the two pixels and a predetermined threshold. Specifically, if the difference between the gray levels of the two pixels exceeds the threshold, a part of the boundary B exists between the two pixels and, if the difference between the gray levels of the two pixels is equal to or smaller than the threshold, the boundary B does not exist between the two pixels. If a single pixel region includes a plurality of pixels where the above-described judgement is made on the boundary B, the difference between the gray levels of the plurality of pixels is always equal to or smaller than the threshold. When the object image is a color image, the boundary processing portion 48 has a configuration in which the pixel data includes a plurality of components which are respectively associated with a plurality of colors. The boundary processing portion 48 therefore calculates a gray level difference for each of the plurality of components between an arbitrary pixel and a pixel adjacent to that pixel and makes a judgement that a part of a boundary B exists between the two pixels if the gray level difference for at least one component exceeds the threshold. This is the end of the description of the boundary detecting process.

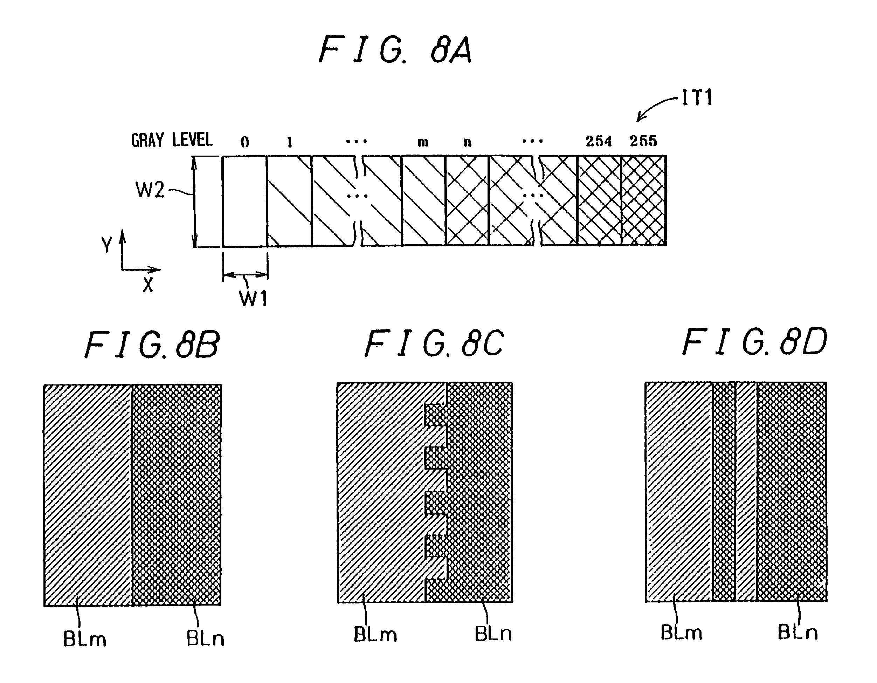

The following test was conducted to evaluate the boundary process carried out by the image processing apparatus 21 of the present embodiment. Briefly, the test was carried out as follows. A reference image IT1 as shown in Fig. 8A was prepared as a processing-object image. The reference image IT1 is a so-called gray scale pattern chart. Specifically, the reference image IT1 is a monochromatic image having a configuration in which blocks $BL_0$ through $BL_{255}$ having 256 densities respectively corresponding to all gray levels in the effective range of gray levels, i.e., the range from 0 to 255 inclusive are sequentially arranged adjacent to each other in a row in the order of the magnitudes of the gray levels associated therewith. When the above-described reference image IT1 was prepared, it was subjected to each of the boundary process described in the present embodiment (hereinafter also referred to as "inventive boundary process") and the boundary process described in the section of the related art (hereinafter also referred to as "boundary process according to the prior art"). For example, the boundary process according to the prior art is the process disclosed in JP-A 61-194977 which is specifically a process of detecting a boundary between pixel regions in a processing-object image and correcting the image such that the boundary will have an irregular configuration.

After the boundary process, the unprocessed reference image IT1, a first processed image obtained by carrying out the conventional boundary process on the reference image IT1 and a second processed image obtained by carrying out the boundary process according to the invention on the references image IT1 were printed on recording paper using a printer. As a result, three kinds of evaluation charts were obtained. After the printing, a so-called functionality evaluation test was carried out using the three kinds of evaluation charts to see the gray levels of blocks which have false contours in the vicinity thereof in the reference image IT1 and the first and second processed images. Briefly, the procedure of the test was as described above.

Specifically, the reference image IT1 has the following configuration. A boundary line between any adjoining two blocks $BL_m$ ad $BL_n$ in the reference image extends continuously. Any single block $BL_i$ is a pixel region having a configuration in which a plurality of pixels having the same density are arranged in the form of a matrix, and the numbers of pixels W1 and W2 of the block $BL_i$ in the directions of the width and length thereof are 6 and 120 respectively. The difference between the gray levels of any two adjoining blocks in the reference image is always 1. The boundary B between any two adjoining blocks $BL_m$ and $BL_n$ in the reference image is a line segment which is in parallel with the columns of pixels as shown in Fig. 8B.

The first processed image is the same as the reference image IT1 except that the boundary $B_m$ between the blocks $BL_m$ and $BL_n$ are irregular as shown in Fig. 8C. The second processed image is the same as the reference image IT1 except that the reflection densities of pixels in regions adjacent to the boundary $B_m$ between the two adjoining blocks $BL_m$ and $BL_n$ are exchanged with each other as shown in Fig. 8D. Fig. 8A shows the value of the gray level corresponding to the density of pixels that form each of blocks $BL_0$ through $BL_{255}$ in the vicinity thereof. In the context of the description, i represents an arbitrary integer which is equal to or greater than 0 and equal to or smaller than 255; m represents an arbitrary integer which is equal to or greater than 0 and equal to or smaller than 254; and n represents a number which is greater than m by 1.

Image data representing the reference image was generated on a computer using a image creating program "PhotoShop" (product name) manufactured by Adobe Systems Inc. Each of the evaluation charts having the reference image IT1 and the first and second processed images respectively printed thereon was generated by writing images represented by the image data on printing paper "PR-H100WP" (product name) using an image setter "SelectSetAvantra25" (product name) for creating printing artwork manufactured Agfa-Gevaert Corp. The laser resolution for the writing was 3600 dpi (dots per inch). On the evaluation charts, the gray levels of the reference image are represented using mesh points with 225 mesh lines.

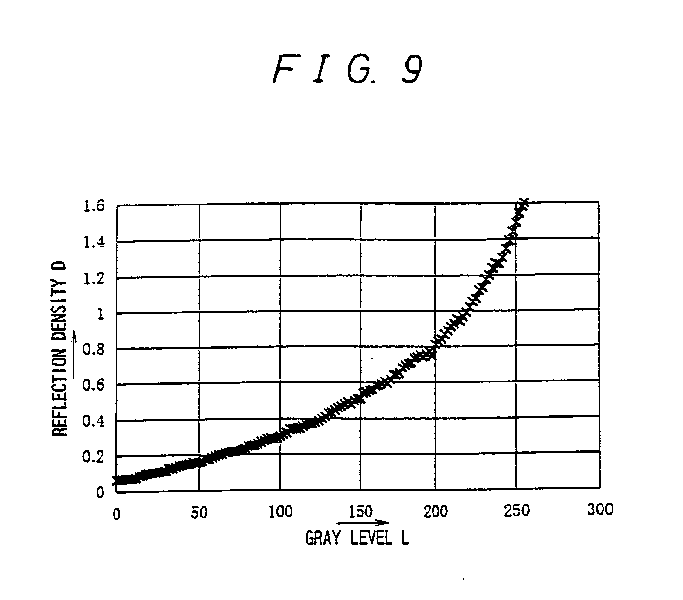

In order to examine the relationship between reflection densities and gray levels on the evaluation chart, a reflection density meter was used to measure the optical reflection densities of the blocks $BL_0$ through $BL_{255}$ on the first evaluation chart on which the unprocessed reference image IT1 is printed. The reflection density meter is manufactured by Gretag Macbeth AG and has a model number RD-918. Fig. 9 is a graph showing a relationship between gray levels and reflection densities identified as a result of the measurement. It is apparent from Fig. 9 that the reflection density increases with the gray level on the evaluation chart. The gradient of the tangent line of the graph of gray levels, i.e., the rate of change of the reflection density becomes greater, the higher the gray level. Therefore, while the difference between the gray levels of two adjoining blocks $BL_m$ and $BL_n$ in the unprocessed reference image IT1 is always 1, the difference between the reflection densities of the two blocks $BL_m$ and $BL_n$ on the first evaluation chart becomes greater, the higher the gray level of the block $BL_m$. The first evaluation chart having the unprocessed image printed thereon therefore indicates that false contours are more likely to appear at a boundary of a block $BL_i$ and in the vicinity of the same, the higher the gray level of the block $BL_l$, i.e., false contours are likely to appear in blocks in so-called high density regions.

The functionality evaluation test was specifically carried out according to the following procedure. Forty-five personnel participated in the functionality evaluation test as testers. In order to avoid interference of judgements as a result of simultaneous evaluation by plural persons on a single evaluation chart, each tester evaluated the three kinds of evaluation charts independently. A fluorescent lamp was used as a light source to illuminate the evaluation charts. The reason is that the evaluation charts were monochromatic images and that the spectral characteristics of the light source were deemed negligible in consideration to the simplicity of the test. In order to eliminate influence of the reflection of light from the fluorescent lamp, the evaluation charts were set at an angle of about 15 degrees to a horizontal surface. Luminance of the surfaces of the evaluation charts during observation by the testers was 5001x as a result of measurement using a digital luminance meter (model number 3422) manufactured by HIOKI E.E. Corporation. The observing distance from each evaluation chart to the testers was a least distance of distinct vision of 300 mm. Under such conditions, the testers sequentially evaluated each of the above-described three kinds of evaluation charts whether any false contour is recognized between boundaries $B_m$ between two adjoining blocks $BL_m$ and $BL_n$ in the order of decreasing gray levels starting with the boundary $B_{254}$ between the block $BL_{255}$ having the maximum gray level and the block $BL_{254}$ adjacent to the same block.

Table 1

|  | Reference Image IT1 (Original Image) | First Processed Image (Prior Boundary Process) | Second Processed Image (Inventive Boundary Process) |
|---|---|---|---|
| Discriminated Gray Level | 98 | 223 | 227 |
| Density Difference ΔD | 0.005 | 0.013 | 0.014 |

Table 1 shows averages of the results of evaluation on the three kinds of evaluation charts by all testers. The discriminated gray level in Table 1 is an average of the gray levels of the lowest blocks at which all testers respectively recognized any false contour on each of the evaluation charts. A lowest block is the block having the lowest gray level among all of blocks at which a tester recognized any false contour at a boundary thereof or in the vicinity thereof. The density difference ΔD between adjoining pixels in Table 1 is the difference between the density of a block having a recognized gray level as described above and the density of a block which is adjacent to the block with a boundary interposed therebetween where any false contour is recognized.

Specifically, in the functionality evaluation test, half of the testers or 50 % of the testers in terms of relative cumulative frequency recognized false contours at the boundaries $B_{255}$ through $B_{98}$ of all of the blacks from the block $BL_{255}$ having a gray level of 255 up to the block $BL_{98}$ having a gray level of 98 or in the vicinity of the boundaries on the first evaluation chart having the reference image IT1 printed thereon. In the functionality evaluation test, half of the testers recognized false contours at the boundaries $B_{255}$ through $B_{223}$ of all of the blocks from the block $BL_{255}$ having a gray level of 255 up to the block $BL_{223}$ having a gray level of 223 on the second evaluation chart having the image processed with the conventional boundary process printed thereon. In the functionality evaluation test, half of the testers recognized false contours at the boundaries $B_{255}$ through $B_{227}$ of all of the blocks from the block $BL_{255}$ having a gray level of 255 up to the block $BL_{227}$ having a gray level of 227 on the third evaluation chart having the image processed with the inventive boundary process printed thereon. When the relative cumulative frequency for the testers for a boundary of a certain block is 100 %, it means that all of the testers have recognized any false contour at the boundary.

Examiners for whom the relative cumulative frequency was 10 % or more and 20 % or less could discriminate a block having a gray level equal to or lower than the discriminated gray level and having a density difference of 0.003 from a block adjacent thereto on the first evaluation chart having the reference image printed thereon. No tester could discriminate a block having a gray level equal to or lower than the discriminated gray level and having a density difference of 0.002 from a block adjacent thereto on the first evaluation chart. On the second evaluation chart having the processed image printed thereon which has been subjected to the boundary process according to the prior art, some irregular patterns unseen on the reference image were observed at boundaries where false contours are recognized and in the vicinity thereof. No irregular pattern was observed on the third evaluation chart having the processed image printed thereon which has been subjected to the inventive boundary process. The results of the functionality evaluation test were as described above.

Referring to the test on the boundary process according to the invention, an evaluation chart was created according to the above-described procedure under conditions achieved by changing the above-described test conditions, i.e., the absolute value of the reflection density of each block, a plurality of parameters of the functionality evaluation test and the absolute value of the reflection density of each block of the reference image, and a functionality evaluation test was conducted on the evaluation chart. For example, the parameters of the functionality evaluation test are the type of the testers of the functionality evaluation test, i.e., whether they are expert panels or general panels, whether the observing distance of the evaluation chart is a predefined distance or an arbitrary distance and whether the absolute reflection density of the lowest block is a low density part or a high density part of the range of the reflection densities of pixels. As a result of the test based on the modified conditions, on the first evaluation chart having the reference image printed thereon, the density difference between the lowest block at which false contours were observed and a block adjacent to the same block was 0.005. On the third evaluation chart having the second processed image printed thereon, the density difference between the lowest block at which false contours were observed and a pixel adjacent to the same block was 0.014.

The results of the above-described test indicate that false contours are observed at a boundary $B_m$ between two adjoining blocks $BL_m$ and $BL_n$ when the density difference $\Delta D$ between the two blocks $BL_m$ and $BL_n$ exceeds 0.005 in the unprocessed reference image. The results of the above-described test indicate that false contours are observed at a boundary $B_m$ between two adjoining blocks $BL_m$ and $BL_n$ when the density difference $\Delta D$ between the two blocks is equal to or greater than 0.013 in the image processed using the boundary process according to the prior art. Further, the results of the above-described test indicate that false contours are observed at a boundary $B_m$ between two adjoining blocks $BL_m$ and $BL_n$ when the density difference $\Delta D$ between the two blocks is equal to or greater than 0.014 in the image processed using the boundary process according to the invention. It would be therefore understood that the boundary process according to the invention makes it possible to suppress false contours at a boundary $B_m$ between two adjoining blocks $BL_m$ and $BL_n$ where the density difference is greater than the density difference at a boundary where false contours can be suppressed with the boundary process according to the prior art.

The results of the above-described test also indicate that any pattern attributable to the inventive boundary process is prevented from being added to an image processed using the inventive boundary process. This is considered attributable to the fact that when the inventive boundary process is carried out on a processing-object image, patterns in the processed image generated due to the process, i.e., the second pixel regions RD5 and RD6 in Figs. 4 through 7 are difficult to discriminate for human eyes because they are in parallel with false contours that appear in the image before and after the process. The inventive boundary process is therefore capable of rendering a boundary B in a processed image more naturally compared to the boundary process according to the prior art. Further, the inventive boundary process is simpler than the boundary process according to the prior art in which a boundary is shaped into an irregular configuration. Therefore, the use of the boundary process according to the present embodiment puts less burden to the apparatus which carry out the boundary process than the conventional boundary process.

The width of a exchange-object region as described above, i.e., the number of the pixels to be exchanged in the exchange-object region which are arranged in a row from the boundary B in a direction perpendicular to the boundary B or the reference number of pixels is defined as follows. When the processing-object image is a color image, the reference number of pixels is preferably greater than the reference number of pixels in the case wherein the processing-object image is a monochromatic image. The reason is as follows. Otherwise, only binary determination whether the colors of pixel is black or white will be finally allowed for a processing-object image which is a color image because changes in the colors of pixels becomes more difficult to determine as the resolution of the image increases. For example, the reference number of pixels is preferably four when the processing-object image is a monochromatic image, and the reference number of pixels is preferably seven when the processing-object image is a color image.

When the resolution of an image from the image output apparatus 25 of the image forming apparatus 21 is variable, the reference number of pixels is preferably varied depending on changes in the resolution. For example, the reference number of pixels is preferably varied depending on the resolution so that the ratio of the reference number of pixels to the resolution is always equal to a predetermined value C as indicated by Equation 1. For example, the reference number of pixels is preferably five for a resolution of 600 dpi, and the reference number of pixels is preferably ten for a resolution of 1200 dpi.

$$\frac{\text{Reference Number of Pixels}}{\text{resolution (dpi)}} = \frac{5}{600} = \frac{10}{1200} \doteqdot C \doteqdot 0.83 \quad \cdots \ (1)$$

When the reference number of pixels is much smaller than a optimum number for suppressing false contours, the effect of the boundary process can be lost because changes in an image attributable to the boundary process fall below the limit for recognition with human eyes. When the reference number of pixels is much greater than the optimum number, changes in an image attributable to the boundary process can produce new false contours because the correcting effect of the boundary process is enhanced excessively. Therefore, the reference number of pixels is identified, for example, through an experiment. At the experiment, the boundary process is carried out on a predetermined reference image several times with the reference number of pixels varied; an image obtained as a result of a correction made at each boundary process is evaluated using a functionality evaluation test; and, based on the result of the evaluation, a reference number of pixels is chosen at which false contours are sufficiently suppressed in an unprocessed reference image and no false contour is newly produced.

For example, when a plurality of reference numbers of pixels are chosen as a result of the above-described experiment, the smallest reference number of pixels is preferably selected from among the plurality of reference numbers of pixels. The purpose is to increase the speed of the boundary process as much as possible and to reduce burdens to components which are involved with the process, as much as possible. For example, when reference numbers of pixels from five to ten inclusive are chosen as a result of the experiment as being effective in suppressing false contours and preventing the occurrence of new false contours with a resolution of 600 dpi, the smallest number or five is preferably chosen from among the reference numbers of pixels chosen at the experiment as a reference number of pixels to be actually used in the subsequent process. The reference number of pixels has now been described.

A configuration of the reader 33 of the present embodiment will now be described with reference to Figs. 1 and 2. The reader 33 includes an original table 61, an optical system 62, a camera device 63 and a moving portion 64. The optical system 62 has a light source 66 for exposure, a plurality of reflecting mirrors 67 and an imaging lens 68. For example, the original table 61 is a transparent glass plate. For example, the camera device 63 is a one-dimensional CCD line sensor composed of a plurality of light-receiving elements arranged in the form of a straight line.

An original to be read is placed on the original table 61. The light source 66 for expose illuminates the original placed on the original table 61 with light. The light is reflected by the surface of the original, then sequentially reflected by the plurality of reflecting mirrors 67 and focused by the imaging lens 68 on an imaging surface of the camera device 63. The camera device 63 carries out photoelectric conversion of the optical image formed on the imaging surface to photograph at least a part of the surface of the original. Thus, an analog image signal as described above is obtained. The analog image signal represents an image of the surface of the original. The moving portion 64 moves the portion of the original to be projected upon the camera device 63 in a predetermined direction at a predetermined speed. For this purpose, the moving portion 64 in the present embodiment moves a unit constituted by a combination of the light source 66 for exposure and one of the reflecting mirrors 67 in a sub scanning direction at a predetermined speed. When the variable power of the image can be changed, the speed decreases as the variable power increases. The reader 33 has been described above.

A description will now be made with reference to Fig. 2 on a specific configuration of the transport apparatus 36 and the printer 37 in a case wherein the printer 33 is an electrophotographic printer. In addition to the LSU 38, the printer 37 includes a photosensitive body 71, a primary charger 72, a developer 73, a transfer apparatus 74, a cleaner 75 and a fuser 76. The transport apparatus 36 includes a paper cassette 81, a semi-lunar roller 82, a pre-resist detection switch 83, a pair of resist rollers 84, a detection switch 85 for fusing and a pair of paper ejection rollers 86.

The photosensitive body 71 is a drum-shaped member which rotates in the direction indicated by the arrow about the center axis of the cylinder. The primary charger 72, LSU 38, developer 73, transfer apparatus 74 and cleaner 75 are arranged in the order listed in the direction of the arrow around the photosensitive body 71. The primary charger 72 uniformly charges the surface of the photosensitive body 71. The LSU 38 intermittently illuminates the surface of the photosensitive body 71 with laser light based on image data processed by the image processing apparatus 24. As a result, an electrostatic latent image is formed on the surface of the photosensitive body 71. The developer 73 develops the electrostatic latent image on the surface of the photosensitive body 71 to form a toner image.

Concurrently with the formation of the toner image, the transport apparatus 36 transports a sheet of recording paper into a gap between the photosensitive body 71 and transfer apparatus 74 according to the following procedure. The recording paper is contained in the paper cassette 81 before the transportation. When the semi-lunar roller 82 rotates, a sheet of recording paper is supplied from the paper cassette 81 to the printer 37. The pre-resist detection switch 83 detects whether the recording paper has been supplied to a gap between the semi-lunar roller 82 and resist rollers 84. The resist rollers 84 establish alignment between the toner image on the photosensitive body 71 and the recording paper based on the result of the detection of the pre-resist detection switch 83. As a result, the recording paper is transported to the gap between the photosensitive body 71 and transfer apparatus 74. After the recording paper is transported, the toner image on the surface of the photosensitive body 71 is transferred to the recording paper by the transfer apparatus 74. The cleaner 75 removes residual toner on the surface of the photosensitive body 71 after the transfer of toner.

The fuser 76 is constituted by a pair of rollers having a heater, and at least one of the rollers is heated. The recording paper having the toner image thereon passes through a gap between the pair of rollers of the fuser 76. As a result, the toner image is thermally fused on to the recording paper. The detection switch 85 for fusing detects whether the recording paper has passed through the fuser 76. The paper ejection rollers 86 eject the recording paper having the toner image fused thereon out of the image forming apparatus 21 based on the result of the detection by the detection switch 85 for fusing. An image is printed as a result of the above-described operation. The transport apparatus 36 and printer 37 have been described above.

A description will now be made with reference to Fig. 1 on a configuration of the portions 41 through 47 excluding the boundary processing portion 48 in the image processing apparatus 24, i.e., the shading portion 41, ..., halftone processing portion 47. In the following description, the direction in which the plurality of light-receiving elements are arranged is referred to as "main scanning direction", and the direction in which the transferred region is moved is referred to as "sub scanning direction". The main and sub scanning directions are orthogonal to each other. Further, a plurality of pixels arranged in the main scanning direction in an image are sometimes collectively referred to as pixels for one line. The reflection density corresponding to the brightest color within the effective range of the gray levels, i.e., white is sometimes referred to as "white level", and the reflection density corresponding to the darkest color within the effective range of the gray levels, i.e., black is sometimes referred to as "black level". It is assumed here that a pixel is brighter or closer to white, the higher the gray level of the same when it is output from the A-D converter 34.

The shading portion 41 carries out a shading process on image data output by the A-D converter 34. The shading process is carried out to equalize white levels and black levels of the plurality of pixels of the image arranged in the main scanning direction. The purpose is as follows. There may be variations of the photoelectric conversion characteristics of the plurality of light-receiving elements of the camera device 53. As a result, when a part of the original is photographed by the camera device 53, there may be variations of the white levels of the plurality of pixels. Further, during the photographic operation, a plurality of beams of light reflected by the surface of the original can be refracted in the lens system before they are respectively received by a plurality of light-receiving regions of the camera device 53. As a result, the lengths of the optical paths of the plurality of beams from the surface of the original up to the light-receiving regions can be different from each other. When the white levels of the plurality of pixels are compared, some of the pixels may have a white level lower than the other pixels because of such differences in the optical paths. For such reasons, the plurality of pixels have different white and black levels. The shading process is then carried out on the image data to equalize the white and black levels of the plurality of pixels.

The visibility correcting portion 42 carries out a visibility correcting process on the image data which has been subjected to the shading process. The purpose is as follows. The plurality of light-receiving regions of the camera device 53 have a photoelectric conversion characteristic which is linear relative to the quantity of incident beams of light, i.e., the density indicated by the image data increases in proportion to the increase of the quantity of light. On the contrary, it is known that the sensitivity of human eyes to light exhibits a logarithmic characteristic relative to the quantity of light incident thereupon. The above-described visibility correction process is therefore carried but because it is convenient for image processing to establish a relationship between the gray level of a certain pixel in image data and the density of the region of the original corresponding to the pixel which is compliant to the sensitivity of human eyes.

As the visibility correcting process, specifically, the visibility correcting portion 42 digitizes the image data which has been subjected to the shading process using a logarithmic function. In order to reduce the cost of the visibility correcting process, the visibility correcting portion 42 may use a so-called one-dimensional look-up table (1D-LUT). A one-dimensional look-up table is a table on which a plurality of input values are respectively associated with a plurality of output values in a one-to-one relationship. On the one-dimensional look-up table for the visibility correcting process, the input values are the densities of pixels, and the output values are densities to be substituted for the densities. When the one-dimensional look-up table is used, the visibility correcting portion 42 converts each of densities represented by pixel data which constitutes the image data with reference to the one-dimensional look-up table.

The density inverting portion 43 carries out a density inverting process on the image data which has been subjected to the visibility correcting process. Specifically, the density inverting portion 43 inverts the relationship between the gray levels of the pixel data constituting the image data and the brightness of the pixels. As a result, the density corresponding to the black level becomes the highest level within the effective range of the gray levels, i.e., "255", and the density corresponding to the white level becomes the lowest level within the effective range of the gray levels, i.e., "0". Thus, a pixel is darker, the higher the gray level.

The purpose is as follows. While a camera device generally increases the gray level of the pixel data of a pixel the brighter the pixel, a printer prints a pixel darker the higher the gray level of the pixel data. Thus, the relationship between the gray level and the reflection density of a pixel at the time of output from the camera device is the reverse of the above-described relationship at the time of printing with the printer. Therefore, in order to match the image data which has been subjected to the visibility correcting process with the specifications of the LSU 38, it is necessary to invert the relationship between the gray level and reflection density before the pixel data is supplied to the printer.

The filter portion 44 carries out a predetermined filtering process on the image data which has been subjected to the density inverting process. When the filter portion 44 is a digital filter, the filter portion 44 carries out the filtering process on pixel data of each of a plurality of pixels which constitute the image data which has been subjected to the density inverting process. The input/output characteristics of the filter portion 44 are determined depending on the purpose of the filter portion 44. For example, the purpose of the filter portion 44 of the present embodiment is to improve the MTF of an image represented by image data.

The output $\gamma$ correction portion 45 carries out a $\gamma$ correction process on the image data which has been subjected to the filtering process to match them with the gray scale characteristics of the LSU 38, i.e., the gray scale characteristics of the printer in the image forming apparatus 21. The purpose is as follows. The gray scale characteristics of the LSU 38 and the range of renderable reflection densities vary depending on the specifications. For example, when the printer 36 used is a so-called electrophotographic type, the range of renderable reflection densities is determined in accordance with the thickness and intensity of laser beams scanning the surface of the photosensitive body and the grain size of the toner. When the LSU 38 used is a so-called inkjet type, the range of renderable reflection densities is determined in accordance with the size of ink droplets ejected by the same. It is therefore necessary to convert the gray levels of data of the plurality of pixels which constitute the image data into values indicating reflection densities within the range that can be rendered with the printer in accordance with the specifications of the LSU 38. As described above, the $\gamma$ correction process is carried out on the image data which have been subjected to the filtering process. Specifically, the $\gamma$ correction process is often carried out using a one-dimensional look-up table which has been created in advance in accordance with the LSU 38.

The resolution converting portion 46 carries out a resolution converting process on the image data which has been subjected to the $\gamma$ correction. The purpose is as follows. In a digital image forming apparatus, the resolution of the reader 33 is often different from the resolution of the LSU 38, and the resolution of image data after $\gamma$ correction is often equal to the resolution of the reader 33. It is therefore necessary to carried out an interpolation process or resolution converting process for matching the resolution of image data with the resolution of the LSU 38.

The halftone processing portion 47 carries out a halftone process on the image data which has been subjected to the resolution converting process. The purpose is as follows. Since the image data is treated as a collection of 8-bit pixel data sets while they are transferred from the shading portion 41 up to the resolution converting portion 46, the image data is so-called multi-valued data, i.e., data sets in which data of the plurality of pixels which constitute the image data has two or more bits. An image forming apparatus 21 whose cost must be reduced often uses a so-called binary laser source which can be switched only for turning laser radiation on and off as a laser source for determining the densities of pixels to be printed. When the binary laser source is used, the color of a printed pixel is only black or white. For this reason, in order to print the image represented by the image data on the recording paper as faithfully as possible, a halftone process must be carried out on the image data to display the image in so-called halftones. Therefore, the halftone processing portion 47 carries out multivalue-to-binary conversion on the image data which has been subjected to the resolution converting process to convert it into binary data. In the binary data, pixel data of the plurality of pixels is of one bit. Known halftone processes include dithering and error diffusion.

The image data which has been subjected to various processes as described above are supplied from the halftone processing portion 47 to the boundary processing portion 48 as image data to be processed by the boundary processing portion 48. The density inverting process, filtering process, output $\gamma$ correction process and resolution converting process are not limited to the above-described order and may be carried out in other orders. The operations of the remaining portions 41 through 47 of the image processing apparatus 24 have been briefly described above.

A description will now be made on an image processing apparatus which is a second embodiment of the invention (hereinafter referred to as "second image processing apparatus"). The second image processing apparatus is the same as the image processing apparatus 21 of the first embodiment (hereinafter referred to as "first image processing apparatus") except the points described below. Therefore, components of the second image processing apparatus having the same configurations as those in the first image processing apparatus 21 are indicated by like reference numbers and will not be described.

The second image processing apparatus is a part of, for example, an image forming apparatus and is interposed between the image input apparatus 23 and image output apparatus 25 described in the first embodiment. Specifically, the second image processing apparatus carries out predetermined processes including a boundary process on image data output by the image input apparatus 23 and supplies the processed image data to the image output apparatus 25. The second image processing apparatus includes at least a boundary processing portion for carrying out a boundary process for suppressing false contours (hereinafter referred to as "second boundary processing portion") and a conversion data storing portion. In addition to the second boundary processing portion, the second image processing apparatus may include at least one of the shading portion 41, ..., halftone processing portion 47 described in the first embodiment provided between the image input apparatus 23 and second boundary processing portion. The conversion data storing portion stores the relationship between the gray levels of image data processed by the second image processing apparatus and reflection densities reproduced by the image output apparatus 25 depending on the gray levels.

The conversion data representing the relationship is obtained by associating a plurality of gray levels within an allowable range of gray levels with numerical values representing actual reflection densities reproduced based on the plurality of gray levels, i.e., reflection density data. Specifically, the conversion data may be, for example, a look-up table (LUT) on which the plurality of gray levels and the reflection density data are associated with each other or an approximation function of a graph representing changes in the reflection density data relative to the gray levels as variables or an arithmetic program to allow calculation of a reflection density corresponding to a gray level using the approximation function and the gray level as a variable. For example, the conversion data storing portion is a ROM or flash memory.

The relationship between the gray levels and reflection densities varies depending on changes in the image forming process at the image output apparatus 25 and also varies depending on changes in particular conditions of the image forming process. For example, the relationship changes depending on whether the image output apparatus 25 is an inkjet type or electrophotographic type. When the image output apparatus 25 is an electrophotographic type, the relationship varies depending on changes in particular conditions for the developing, transferring and fusing processes and the type of the toner. For example, the type of the toner varies depending on whether the toner is magnetic or non-magnetic and whether the toner has one component or two components. Therefore, the conversion data for the image forming apparatus are obtained in advance when the image forming apparatus is designed and are preferably stored in the conversion data storing portion of the image forming apparatus. The conversion data is preferably rewritten as needed after being set once. In this case, the conversion data storing portion is more preferably a non-volatile memory, e.g., a flash memory or EEPROM whose memory contents can be rewritten because writing and rewriting of the conversion data is facilitated.

The boundary process at the second boundary processing portion will now be described. Briefly, the boundary process according to the second embodiment (hereinafter referred to as "second boundary process") determines for each pixel whether to execute the process of suppressing false contours on the pixel in the object image in accordance with the relationship between the difference between the reflection densities of the pixel and a pixel adjacent thereto and a predetermined allowable range. The second boundary process follows first and second procedures described below depending on the timing of the conversion between the gray levels and reflection densities.

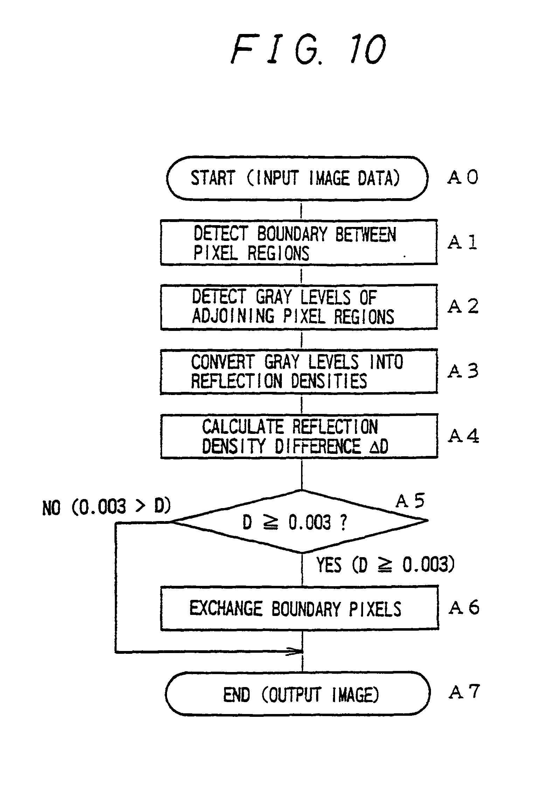

Fig. 10 is a flow chart for explaining the first procedure for the boundary process at the second boundary processing portion. Image data to be subjected to the boundary process are supplied to the second boundary processing portion from the image input apparatus 23 or a component provided between the apparatus 23 and the second boundary processing portion, e.g., the halftone processing portion 47. After the image data to be processed are supplied, the process proceeds from step A0 to step A1. For example, the image data to be processed is stored in a memory, i.e., a RAM (random access memory) in which data can be written included in the second boundary processing portion.

The second boundary processing portion carries out a boundary detecting process at step A1. The boundary detecting process is the same as the process described in the first embodiment. Thus, a boundary B between two pixel regions in an object image represented by the image data to be processed is detected. In the description of Fig. 10, there are at least two pixel regions in the object image. After the boundary is detected, the second boundary processing portion detects the gray levels of all pixel regions adjacent to other pixel regions with the boundary B interposed therebetween in the object image, i.e., the gray level of at least one pixel adjacent to the boundary B in all of the pixel regions (hereinafter referred to as "adjacent pixel") from the image data to be processed.

After the gray levels are detected, the second boundary processing portion converts the gray levels of all of the detected adjacent pixels into reflection density data associated with the gray levels based on the memory contents of the conversion data storing portion at step A3. At the conversion process at step A3, if the memory contents of the conversion data storing portion are an LUT as described above, reflection density data associated with the gray levels of all of the adjacent pixels are selected from the LUT. At a substitution process at step A3, if the memory contents of the conversion data storing portion is an approximation function or arithmetic program as described above, the calculation of the approximation function or the process of the arithmetic program is executed by reading the approximation function or arithmetic program from the conversion data storing portion and substituting the gray levels of all of the adjacent pixels in them. This provides reflection density data associated with the gray levels of the adjacent pixels.

After the reflection density data is obtained, the second boundary processing portion carries out step A4 to calculate a difference ΔD between the reflection densities of two adjoining pixel regions with the boundary B interposed therebetween, i.e., a difference between reflection density data associated with the gray levels of adjoining pixels adjacent to the boundary B in the two pixel regions. After the difference is calculated, the second boundary processing portion compares the density difference ΔD with an upper limit of reflection density difference and a lower limit of reflection density difference within a predetermined allowable range at step A5. A method for setting the allowable range will be described later. The process proceeds to step A6 only when the density difference ΔD is within the allowable range. Fig. 10 shows an example in which only the lower limit value is used for the determination of the set range. When the upper limit value is also taken into consideration, a step is inserted between steps A5 and A6 to compare the density difference ΔD with the upper limit value, and the process may proceed to step A6 if the difference ΔD is equal to or smaller than the upper limit value and may proceed to step A7 if the difference ΔD is greater than the upper limit value.

At step A6, a suppression process is carried out on the image data stored in the memory to suppress false contours at the boundary between the two pixel regions for which the density difference ΔD is within the allowable range. The suppression process may be a process for shaping the boundary B into an irregular configuration or the density conversion process described in the first embodiment, i.e., a process of symmetrically exchanging, about the boundary B, the gray levels of pixels in the exchange-object regions symmetrically set on both sides of the boundary B or any other process. After the suppression process, the boundary process is terminated at step A7. If the density difference ΔD between the two pixel regions is out of the allowable range, the boundary process is terminated at step A7. When there are three or more pixel regions in the object image, processes at steps A2 through A6 are carried out on two adjoining pixel regions among the all pixel regions. The first procedure for the boundary process has been described above.

The second procedure for the boundary process at the second boundary processing portion will now be described. Since the second procedure for the boundary process is the same as the first procedure except the steps described below, like steps may not be described in detail. Image data to be subjected to the boundary process are the same as those described in the first procedure. For example, the image data to be processed is stored in a memory, e.g., a RAM in which data can be written provided in the second boundary processing portion. After the image data to be processed is supplied, the second boundary processing portion converts the gray levels of all pixels in the image data into reflection density data associated with the gray levels. The procedure for the process of converting the gray levels of the pixels is the same as the procedure for the process of converting the gray levels of adjacent pixels described as step A3 in Fig. 10.

After the conversion, the second boundary processing portion detects a boundary between pixel regions in the object image. At the process of detecting a boundary between pixel regions, a difference between the reflection densities of two arbitrary adjoining pixels in the object image is calculated based on the reflection density data of the two pixels, and the density difference is compared with the upper limit and lower limit density differences of the allowable range used in the comparison process at step A5 in Fig. 10. Only when the density difference is within the allowable range, it is judged that a part of a boundary exists between the two pixels and, when the density difference is out of the allowable range, it is judged than no part of a boundary exists between the two pixels. Therefore, the boundary detecting process detects only the boundary of a pixel region for which the density difference from another pixel region adjacent thereto is within the allowable range. Details of the above-described boundary detecting process may be the same as those of a so-called edge detecting process.

After the boundary detection, the second boundary processing portion carries out a suppression process on the image data stored in the memory to suppress false contours in all boundaries detected. The suppression process may be a process of shaping a boundary B into an irregular configuration, the density converting process described in the first embodiment or any other process. After the suppression process, the boundary process is terminated. The second procedure for the boundary process has been described above.

The above-described allowable range for the density difference ΔD is preferably equal to or greater than a predetermined lower limit of reflection density difference and equal to or smaller than the difference between the maximum density that a pixel can have and the minimum density that the same pixel can have (maximum density difference). Theoretically, the lower limit of reflection density difference is preferably the minimum value among density differences in two adjoining pixel regions for which false contours can be observed at a boundary between them. The reason is as follows. If the density difference ΔD between two adjoining pixel regions is equal to or greater than 0 and smaller than the lower limit of reflection density difference, no false contour is recognized in the vicinity of the boundary because density changes at the boundary between the two pixel regions fall below the limit for recognition of density changes by human eyes. In such a case, therefore, it is not necessary to carried out the above-described suppression process at the boundary between the two pixel regions. When the allowable range is equal to or greater than the above-described lower limit of reflection density difference and equal to or smaller than the above-described maximum density difference, the boundary process as a whole is simplified because the suppression process is omitted for the boundary where no false contour is recognized. This reduces the processing time of the boundary process and reduces the burden to the second boundary processing portion.

Based on the result of the experiment referred to in the first embodiment, it was revealed that 50 % or more of the tester in terms of the relative cumulative frequency can not recognize any false contour between two adjoining blocks on the evaluation chart having the reference image printed thereon when the density difference between the two blocks is equal to or greater than 0 and smaller than 0.005. It is therefore assumed that 50 % of the testers in terms of the relative cumulative frequency can discriminate two adjoining pixel regions when the density difference between the two pixel regions is equal to or greater than 0 and smaller than 0.005. Therefore, the minimum value of density differences in the two pixel regions is 0.005 when half of the testers can observe false contours at the boundary between the two pixel regions. Therefore, the lower limit of reflection density difference is preferably 0.005. The result of the above-mentioned experiment also revealed that the discriminated gray level of the reference image is always 0.005 regardless of variations in the parameters for the functionality evaluation test. Thus, when the lower of reflection density difference is 0.005, the lower limit of reflection density difference is considered to be a universal value that is not effected by changes in the details of the image forming apparatus.

The results of the experiment also revealed that some testers can discriminate two blocks for which the density difference is smaller than the discriminated gray level of the reference image, i.e., 0.005. For example, testers of relative cumulative frequency between 10 % and 20 % inclusive can discriminate two adjoining blocks for which the density difference is 0.003, and 0 % tester can discriminate two adjoining blocks with a density difference of 0.002 in terms of relative cumulative frequency. That is, it may be considered that false contours can be observed at the boundary between the two adjoining pixel regions when the density difference in the two adjoining pixel regions is 0.003 or more. Therefore, the lower limit of reflection density difference is preferably 0.003 or more from practical point of view.

The maximum density difference varies under influences of the specifications of the printer, e.g., the printing process and properties of the toner. For example, when the printer is a silver salt type, the maximum pixel density Dmax is 1.9 and the minimum pixel density is 0. The maximum density difference is therefore 1.9. The maximum density Dmax was identified by conducting a functionality evaluation test on an evaluation chart obtained by printing the reference image described in the first embodiment on recording paper using "PictroGraphy 3000" manufactured by Fuji Photo Film Co., Ltd. For example, when the printer is an electrophotographic type, the maximum pixel density Dmax is 1.4, and the minimum pixel density is 0. The maximum density difference is therefore 1.4.

Accordingly, when the printer is a silver salt type, the allowable range is ideally equal to or greater than 0.005 and equal to or smaller than 1.9 and preferably equal to or greater than 0.003 and equal to or smaller than 1.9 from the practical point of view. When the printer is an electrophotographic type, the allowable range is ideally equal to or greater than 0.005 and equal to or smaller than 1.4 and preferably equal to or greater than 0.003 and equal to or smaller than 1.4 from the practical point of view.

As described above, the second boundary processing portion carries out the suppression process only on a boundary between two pixel regions for which the density difference is within the allowable range among all boundaries in the processing-object image. Thus, the boundary process at the second boundary processing portion is simpler than the conventional boundary process wherein the suppression process is carried out on all boundaries in a processing-object image. Therefore, the second boundary processing portion has less burden than a correcting portion that carries out the conventional boundary process. The second boundary processing portion can therefore capable of suppressing false contours in a processing-object image with the processing time of the process for suppressing false contours reduced from that of a boundary processing portion according to the prior art.

The allowable range of the density difference is more preferably equal to or greater than the above-described lower limit of reflection density difference and equal to or smaller than a predetermined upper limit of reflection density difference. The upper limit of reflection density difference is greater than the lower limit of reflection density difference and smaller than the maximum density difference and is a maximum value among reflection density differences in two pixel regions of an image which has been subjected to the suppression process when no false contour is recognized at a boundary between the two pixel regions and in the vicinity of the same. The result of the experiment on the first embodiment indicates that the maximum value of the density difference varies depending on the suppression process. Therefore, the upper limit of reflection density difference is preferably set depending on the suppression process.

The upper limit of relfection density difference of the allowable range is defined as described above for the following reason. As apparent from the experiment on the first embodiment, some false contours are observed in a processed image obtained by carriying out the suppression process on a processing-object image. Therefore, it is difficult for the suppression process to suppress false contours at a boundary between two pixel regions for which the density difference is equal to or greater than the discriminated gray level of the experiment among pixel regions in a processing-object image. When the upper limit of reflection density difference is defined as described above, the suppression process is carried out only on a boundary where the suppression process can suppress false contours. Thus, the second boundary processing portion can suppress false contours in a processing-object image with the processing time required for the process of suppressing false contours reduced further. It is therefore preferable that the allowable range is equal to or greater than the lower limit of reflection density difference and equal to or smaller than the upper limit of reflection density difference.

The result of the experiment on the first embodiment revealed that no false contour is observed at a boundary between two adjacent pixel regions for which the density difference is 0.014 or less when the suppression process, i.e., the process described in the first embodiment is a process of exchanging the densities of pixels on both sides of the boundary symmetrically about the boundary. The discriminated gray level of the second evaluation pattern of the experiment was always 0.014 regardless of the parameters of the functionality evaluation test. Therefore, it is theoretically preferable that the upper density difference is 0.014. It is preferable that the upper limit of reflection density difference has a practical value of 0.015 which is the ideal upper density difference plus a margin of 0.001.

Accordingly, the allowable range is ideally equal to or greater than 0.005 and equal to or smaller than 0.014, preferably equal to or greater than 0.005 and equal to or smaller than 0.015 from the practical point of view and most preferably equal to or greater than 0.003 and equal to or smaller than 0.015 from the practical point of view. The result of the experiment on the first embodiment revealed that half of the testers do not observe any false contour at a boundary between two adjacent pixel regions for which the density difference is 0.013 or less when the conventional boundary process is used. Therefore, when the allowable range is any of the above-described three ranges, the second boundary processing portion can process a boundary between two pixel regions with the density difference that allows suppression of false contours using the suppression process regardless of the processing method employed for the suppression process. It is therefore preferable that the allowable range is any of the above-described three ranges.

The suppression process carried out by the second boundary processing portion is preferably the suppression process described in the first embodiment, i.e., the density exchange process. Since the density exchange process is simpler than conventional suppression processes, the second boundary processing portion can suppress false contours in an image with the burden and processing time of the process for eliminating false contours reduced.

The above-described image processing apparatuses according to the first and second embodiments are required to include at least the boundary processing portion, and other components may be deleted appropriately. The image processing apparatus may be provided in apparatuses other than an image forming apparatus as long as they are apparatuses that processes image data. Furthermore, the image processing apparatuses according to the first and second embodiments may be used alone or used in combination with either the image input apparatus 23 or image output apparatus 25. When the image processing apparatus is used alone or used in combination with either of the two apparatuses 23 and 25, various parameters in the image processing apparatus are adjusted on an assumption that it is used in a processing system including the image input apparatus 23 and image output apparatus 25.

The boundary processing portions of the first and second embodiments are examples of the image correcting apparatus and image processing apparatus according to the invention and may be implemented in other various modes as long as the primary operations are equally carried out. Particularly, the detailed configurations of the plurality of processes carried out by those boundary processing portions are not limited to the above-described configurations and may be replaced by other configurations as long as they have the above-described characteristics. For example, those boundary processing portions may be implemented with a computer. For this purpose, software including a program and data for causing the central processing unit of the computer to carry out the boundary processes respectively described in the first and second embodiments is stored in advance in a medium which can be read by the computer. For example, the medium may be a CD-ROM or a floppy disk. In order to operate the computer as the boundary processing portion, the medium is first loaded in the computer; the software in the medium is installed in the computer; and the program in the installed software is then executed by the central processing unit. As a result, the computer as a whole operates as the boundary processing portion. This makes it possible to implement the boundary processing portions according to the first and second embodiments easily with a general purpose computer.

The above-described image correcting process is advantageously carried out on images, and it is conversely unpreferable to carried out it on character data. Such images are data in an image format such as bitmap and JPEG in the case of a printer and are video data associated with a normal display range in the case of a television. The character data is of text tile such as TXT in the case of a printer and is data for teletext or the like added to the normal display range in the case of a television. That is, since character data satisfies conditions for both of the upper limit of reflection density difference and the lower limit of reflection density difference, the use of the inventive process can produce a contrary result in that the quality of characters can be significantly reduced.

Therefore, when carried out in a printer, the inventive process control such that the process is carried out only on image files by determining the types of data files of interest. Referring to a computer application by way of example, only in the case of imaging software such as PhotoShop or when a file currently opened on a property screen of a printer or the like is an image format file, an item having a title like "false contour correction" appears in an image correction tool bar or a display that validates the selection of the same item appears to allow the execution of the same. Alternatively, a user may select or specify the range of an image region recognized as characters from the entire image region while monitoring the display, and the selected region may be excluded from the object of processing. When the range of an image region is specified, determination of the data types of currently used data files may be inhibited.

It is also advantageous to allow a user to arbitrarily set the values of the lower limit of refletion density difference and upper limit of reflection density difference. For example, a value of 0.003 or 0.005 may be allowed to be selected as the lower limit value, which makes it possible to select either of them with priority in consideration to tradeoff between the effect of image processing and the processing time.

The image correcting process according to the invention is carried out only on video data associated with a normal display range in a display such as a television. Presently, it is common to extract static image portions and dynamic image portions from video data and to carried out respective processes appropriate for them. Therefore, the inventive process may be carried out only on static images and portions having slow movements without carrying out it on dynamic image portions. Furthermore, if it is possible to extract data that is assumed to be characters from video data, the process according to the invention is inhibited on the data associated with characters. This makes it possible to prevent deterioration of the quality of the characters.

**Claims**

1.  An image correcting apparatus comprising:

    boundary detecting means (48) configured to detect a boundary (B) between a plurality of regions (RD1, RD2) consisting of pixels having a reflection density which is equal or greater than a predetermined lower limit of reflection density difference, in an image (I1) to be processed,
    **characterized by**
    a density exchange means (48) configured to exchange densities of pixels between two exchange-object regions (RE1, RE2) which are located symmetrically to each other with respect to the boundary (B) detected by the boundary detecting means (48), each of the exchange-object regions (RE1, RE2) having a predetermined width, one end of which is located at the boundary (B).

2.  The image correcting apparatus of claim 1, wherein number of pixels in the exchange-object regions (RE 1. RE2) of a color image is equal to or greater than number of pixels in the exchange-object regions (RE1, RE2) of a monochromatic image.

3.  The image correcting apparatus of claim 1, wherein the higher the resolution of the image is, the greater the number of pixels in the exchange-object regions (RE 1. RE2) is.

4.  The image processing apparatus comprising an image correcting apparatus in accordance with claim 1,
    **characterized by**
    density difference calculation means (48) configured to calculate a reflection density difference between pixels adjacent to each other in the image (I1); and
    correction control means (48) configured to cause correction means (48) to exchange the densities of pixels between the two exchange-object regions (RE1, RE2) only on a pixel whose reflection density difference is equal to or greater than a predetermined lower limit and prohibiting the correction means (48) from exchanging the densities of pixels between the two exchange-object regions (RE1, RE2) on a pixel whose reflection density difference is smaller than the lower limit,
    wherein the lower limit is a minimum value of reflection density differences of pixels between two pixel regions (RD1, RD2) in which false contours can be recognized.

5.  The image processing apparatus of claim 4, wherein the lower limit is 0.003.

6.  The image processing apparatus of claim 4, wherein the lower limit is 0.005.

7.  The image processing apparatus of claim 4, wherein the correction control means (48) prohibits the correction means (48) from carrying out the correction process on a pixel whose reflection density difference exceeds a predetermined upper limit greater than the lower limit and the upper limit is a maximum value among reflection density differences of pixels between two pixel regions (RD1, RD2) in which no false contour is recognized in an image (I1) which has been subjected to the correction process by the correction means (48).

8.  The image processing apparatus of claim 7, wherein the upper limit is 0.015.

9.  The image processing apparatus of claim 4, further comprising:

relationship storing means (48) configured to store a relationship between a reflection density of a pixel and a predetermined gray level to be related to the reflection density of the pixel:

image data input means (23) configured to input image data representing an image (I1) and including gray levels of all pixels in the image (I1); and
reflection density conversion means (48) configured to convert the gray levels of the pixels in the image data into reflection densities based on contents stored in the relationship storing means (48),

wherein the reflection density difference calculation means (48) uses image data having been converted into the reflection densities from the gray levels.

10. The image processing apparatus of claim 4, wherein the correction means (48) is an image correcting apparatus of claim 1.

11. A method for correcting an image, comprising the step of
detecting (A1) a boundary (B) between a plurality of regions (RD1, RD2) consisting of pixels having a reflection density which is equal or greater than a predetermined lower limit of reflection density difference, in an image (I1) to be processed,
**characterized by** comprising the step of
exchanging (A6) densities of pixels between two exchange-object regions (RE1, RE2) which are located symmetrically to each other with respect to the detected boundary (B), each of the exchange-object regions (RE1, RE2) having a predetermined width, one end of which is located at the boundary (B).

12. The image processing method including the method for correcting an image in accordance with claim 11, comprising the step of
calculating a reflection density difference (A4) between pixels adjacent to each other in an image (I1) to be processed,
**characterized by** further comprising the step of
exchanging (A6) the densities of the pixels between the two exchange-object regions (RE1, RE2) only on a pixel whose reflection density difference is equal to or greater than a predetermined lower limit and prohibiting exchanging the densities of the pixels between two exchange-object regions on a pixel whose reflection density difference is smaller than the lower limit,
wherein the lower limit is a minimum value of reflection density differences of pixels between in two pixel regions (RD1, RD2) in which false contours can be recognized.

13. A medium on which is stored a computer program of image correction control, wherein the computer program causes the computer to perform the step of detecting a boundary (B) between a plurality of regions (RD1, RD2) consisting of pixels having a reflection density which is equal or greater than a predetermined lower limit of reflection density difference, in the image (I1) to be processed
**characterized in that** the computer program causes the computer to perform the step of
exchanging densities of pixels between exchange-object regions (RE1, RE2) which are located symmetrically to each other with respect to the detected boundary (B), each of the exchange-object regions (RE1, RE2) having a predetermined width one end of which is located at the boundary (B).

14. The medium on which is stored a computer program of image processing control comprising a computer program of image correction control in accordance with claim 13,
**characterized in that** the computer program causes the computer to perform the steps of
calculating a reflection density difference (A4) between pixels adjacent to each other in the image (I1), and
exchanging the densities of the pixels between two exchange-object regions (RE1, RE2) only on pixels whose reflection density difference is equal to or greater than a predetermined lower limit and prohibiting exchanging the densities of the pixels between two exchange-object regions on pixels whose reflection density difference is smaller than the lower limit,
wherein the lower limit is a minimum value of reflection density differences of pixels between two pixel regions (RD1, RD2) in which false contours can be recognized.

**Patentansprüche**

1. Vorrichtung zur Bildkorrektur umfassend:

Grenzerfassungsmittel (48), das ausgestaltet ist, um eine Grenze (B) zwischen einer Vielzahl von Bereichen (RD1, RD2), die aus Pixel bestehen, die eine Reflektionsdichte aufweisen, die gleich oder größer als eine vorgegebene untere Grenze des Reflektionsdichteunterschieds ist, in einem zu verarbeitenden Bild (I1) zu erkennen, **gekennzeichnet durch**

ein Dichteaustauschmittel (48), das ausgestaltet ist, um Dichten der Pixel zwischen zwei Austausch-Objekt-Bereichen (RE1, RE2) auszutauschen, welche symmetrisch zu einander in Bezug auf die Grenze (B), die **durch** das Grenzerfassungsmittel (48) erfasst ist, angeordnet sind, wobei jeder der Austausch-Objekt-Bereiche (RE1, RE2) eine vorgegebene Breite aufweist, von denen jeweils ein Ende an der Grenze (B) angeordnet ist.

2.  Vorrichtung zur Bildkorrektur nach Anspruch 1, wobei eine Anzahl der Pixel in den Austausch-Objekt -Bereichen (RE1, RE2) eines Farbbildes gleich oder größer als eine Anzahl der Pixel in den Austausch-Objekt-Bereichen (RE1, RE2) eines monochromatischen Bildes ist.

3.  Vorrichtung zur Bildkorrektur nach Anspruch 1, wobei die Anzahl der Pixel in den Austausch-Objekt-Bereichen (RE1, RE2) umso größer ist, je höher die Auflösung des Bildes ist.

4.  Vorrichtung zur Bildverarbeitung umfassend eine Vorrichtung zur Bildkorrektur nach Anspruch 1, **gekennzeichnet durch**

    Dichtedifferenz-Berechnungsmittel (48), die ausgestaltet sind, um eine Reflektionsdichtedifferenz zwischen zueinander benachbarten Pixel in dem Bild (I1) zu berechnen; und

    Korrektursteuermittel (48), die ausgestaltet sind, um das Korrekturmittel (48) zu veranlassen, die Dichten der Pixel zwischen den zwei Austausch-Objekt-Bereichen (RE1, RE2) nur an einem Pixel zu verändern, dessen Reflektionsdichtedifferenz gleich oder größer als eine vorgegebene untere Grenze ist, und um das Korrekturmittel (48) daran zu hindern, die Dichten der Pixel zwischen den zwei Austausch-Objekt-Bereichen (RE1, RE2) an einem Pixel zu verändern, dessen Reflektionsdichtedifferenz kleiner als die untere Grenze ist, wobei die untere Grenze ein minimaler Wert der Reflektionsdichtedifferenzen von Pixel zwischen zwei Pixelbereichen (RD1, RD2) ist, bei der falsche Grenzlinien erkannt werden können.

5.  Vorrichtung zur Bildverarbeitung nach Anspruch 4, wobei die untere Grenze 0,003 ist.

6.  Vorrichtung zur Bildverarbeitung nach Anspruch 4, wobei die untere Grenze 0,005 ist.

7.  Vorrichtung zur Bildverarbeitung nach Anspruch 4, wobei das Korrektursteuermittel (48) die Korrekturmittel (48) daran hindert, den Korrekturvorgang an einem Pixel auszuführen, dessen Reflektionsdichtedifferenz eine vorgegebene obere Grenze überschreitet, die größer als die untere Grenze ist, und wobei die obere Grenze ein maximaler Wert unter den Reflektionsdichtedifferenzen der Pixel zwischen zwei Pixelbereichen (RD1, RD2) ist, bei der keine falsche Grenzlinie in einem Bild (I1) erkannt wird, welches dem Korrekturvorgang durch das Korrekturmittel (48) unterworfen wurde.

8.  Vorrichtung zur Bildverarbeitung nach Anspruch 7, wobei die obere Grenze 0,015 ist.

9.  Vorrichtung zur Bildverarbeitung nach Anspruch 4, ferner umfassend:

    Beziehungsspeichermittel (48), die ausgestaltet sind, um eine Beziehung zwischen einer Reflektionsdichte eines Pixels und einer vorgegebenen Graustufe, die zu der Reflektionsdichte des Pixels in Verhältnis gesetzt werden soll, zu speichern;
    Bilddaten-Eingabemittel (23), die ausgestaltet sind, um Bilddaten, die ein Bild (I1) darstellen und die Graustufen aller Pixel in dem Bild (I1) enthalten, einzugeben; und
    Reflektionsdichte-Umwandlungsmittel(48), die ausgestaltet sind, um die Graustufen der Pixel in den Bilddaten in Reflektionsdichten auf Grundlage der in den Beziehungsspeichermittel (48) gespeicherten Inhalten umzuwandeln,

    wobei das Reflektionsdichtedifferenz-Berechnungsmittel (48) Bilddaten verwendet, die in den Reflektionsdichten von den Graustufen umgewandelt worden sind.

10. Vorrichtung zur Bildverarbeitung nach Anspruch 4, wobei das Korrekturmittel (48) eine Vorrichtung zur Bildkorrektur nach Anspruch 1 ist.

**11.** Verfahren zur Korrektur eines Bildes, das den Schritt umfasst

Erkennen (A1) einer Grenze (B) in einem zu verarbeitenden Bild (I1) zwischen einer Vielzahl von Bereichen (RD1, RD2), die aus Pixel bestehen, die eine Reflektionsdichte aufweisen, die gleich oder größer als eine vorgegebene untere Grenze der Reflektionsdichtedifferenz ist, **dadurch gekennzeichnet, dass** es den Schritt umfasst

Austauschen (A6) der Dichten von Pixel zwischen zwei Austausch-Objekt-Bereichen (RE1, RE2), welche symmetrisch zueinander in Bezug auf der erkannten Grenze (B) angeordnet sind, wobei jeder der Austausch-Objekt-Bereiche (RE1, RE2) eine vorgegebene Breite aufweist, von denen jeweils ein Ende an der Grenze (B) angeordnet ist.

**12.** Verfahren zur Bildverarbeitung einschließlich das Verfahren zur

Korrektur eines Bildes nach Anspruch 11, das den Schritt umfasst Berechnen einer Reflektionsdichtedifferenz (A4) zwischen zueinander benachbarten Pixel in einem zu verarbeitenden Bild (I1), **dadurch gekennzeichnet, dass** es ferner den Schritt umfasst

Austauschen (A6) der Dichten der Pixel zwischen zwei Austausch-Objekt-Bereichen (RE1, RE2) nur an einem Pixel, dessen Reflektionsdichtedifferenz gleich oder größer als eine vorgegebene untere Grenze ist, und Verhindern, dass die Dichten der Pixel zwischen zwei Austausch-Objekt-Bereichen an einem Pixel ausgetauscht werden, dessen Reflektionsdichtedifferenz kleiner als die untere Grenze ist, wobei die untere Grenze ein minimaler Wert der Reflektionsdichtedifferenzen der Pixel zwischen zwei Pixelbereichen (RD1, RD2) ist, bei der falsche Konturen erkannt werden können.

**13.** Medium, auf dem ein Computerprogramm zur Bildkorrektursteuerung gespeichert ist, wobei das Computerprogramm den Computer veranlasst, den Schritt auszuführen, eine Grenze (B) in einem zu verarbeitenden Bild (I1) zwischen einer Vielzahl von Bereichen (RD1, RD2) zu erkennen, die aus Pixel bestehen, die eine Reflektionsdichte aufweisen, die gleich oder größer als eine vorgegebene untere Grenze der Reflektionsdichtedifferenz ist,

**dadurch gekennzeichnet, dass** das Computerprogramm den Computer veranlasst, den Schritt auszuführen, die Dichten der Pixel zwischen Austausch-Objekt-Bereichen (RE1, RE2) auszutauschen, welche symmetrisch zueinander in Bezug auf die erkannte Grenze (B) angeordnet sind, wobei jeder der Austausch-Objekt-Bereiche (RE1, RE2) eine vorgegebene Breite aufweist, von denen jeweils ein Ende an der Grenze (B) angeordnet ist.

**14.** Medium, auf dem ein Computerprogramm zur Bildverarbeitungssteuerung gespeichert ist, umfassend ein Computerprogramm zur Bildkorrektursteuerung nach Anspruch 13,

**dadurch gekennzeichnet, dass** das Computerprogramm den Computer veranlasst, die Schritte auszuführen Berechnen einer Reflektionsdichtedifferenz (A4) zwischen zueinander in dem Bild (I1) benachbarten Pixel, und Austauschen der Dichten von Pixel zwischen zwei Austausch-Objekt-Bereichen (RE1, RE2) nur an Pixel, deren Reflektionsdichtedifferenz gleich oder größer als eine vorgegebene untere Grenze ist, und Verhindern, dass die Dichten von Pixel zwischen zwei Austausch-Objekt-Bereichen an Pixel ausgetauscht werden, deren Reflektionsdichtedifferenz kleiner als die untere Grenze ist,

wobei die unter Grenze ein minimaler Wert der Reflektionsdichtedifferenzen der Pixel zwischen zwei Pixelbereichen (RD1, RD2) ist, bei der falsche Grenzlinien erkannt werden können.

**Revendications**

**1.** Appareil de correction d'image comprenant :

des moyens de détection de limite (48) qui sont conçus pour détecter une limite (B) entre plusieurs zones (RD1, RD2) formées de pixels dont la densité de réflexion est égale ou supérieure à une limite inférieure prédéterminée de différence de densité de réflexion, dans une image (I1) à traiter,

**caractérisé par** des moyens d'échange de densité (48) qui sont conçus pour échanger les densités de pixels entre deux zones d'objet d'échange (RE1, RE2) symétriques par rapport à la limite (B) détectée par les moyens de détection de limite (48), chacune des zones d'objet d'échange (RE1, RE2) ayant une largeur prédéterminée dont une extrémité se trouve au niveau de la limite (B).

**2.** Appareil de correction d'image de la revendication 1, dans lequel le nombre de pixels dans les zones d'objet d'échange (RE1, RE2) d'une image en couleur est égal ou supérieur au nombre de pixels dans les zones d'objet d'échange (RE1, RE2) d'une image monochrome.

**3.** Appareil de correction d'image de la revendication 1, dans lequel plus la résolution de l'image est grande, plus le nombre de pixels dans les zones d'objet d'échange (RE1, RE2) est élevé.

4. Appareil de traitement d'image comprenant un appareil de correction d'image selon la revendication 1, **caractérisé par** des moyens de calcul de différence de densité (48) qui sont conçus pour calculer une différence de densité de réflexion entre des pixels voisins, dans l'image (I1) ; et
des moyens de commande de correction (48) qui sont conçus pour amener les moyens de correction (48) à échanger les densités de pixels entre les deux zones d'objet d'échange (RE1, RE2) seulement sur un pixel dont la différence de densité de réflexion est égale ou supérieure à une limite inférieure prédéterminée, et qui empêchent les moyens de correction (48) d'échanger les densités de pixels entre les deux zones d'objet d'échange (RE1, RE2) sur un pixel dont la différence de densité de réflexion est inférieure à la limite inférieure,
la limite inférieure étant une valeur minimale de différence de densité de réflexion de pixels entre deux zones de pixels (RD1, RD2) dans lesquelles des faux contours peuvent être reconnus.

5. Appareil de traitement d'image de la revendication 4, dans lequel la limite inférieure est de 0,003.

6. Appareil de traitement d'image de la revendication 4, dans lequel la limite inférieure est de 0,005.

7. Appareil de traitement d'image de la revendication 4, dans lequel les moyens de commande de correction (48) empêchent les moyens de correction (48) de réaliser l'opération de correction sur un pixel dont la différence de densité de réflexion dépasse une limite supérieure prédéterminée supérieure à la limite inférieure, et la limite supérieure est une valeur maximale parmi les différences de densité de réflexion de pixels entre deux zones de pixels (RD1, RD2) dans lesquelles aucun faux contour n'a été reconnu dans une image (I1) soumise à l'opération de correction par les moyens de correction (48).

8. Appareil de traitement d'image de la revendication 7, dans lequel la limite supérieure est de 0,015.

9. Appareil de traitement d'image de la revendication 4, comprenant également :

des moyens de stockage de rapport (48) qui sont conçus pour stocker un rapport entre une densité de réflexion d'un pixel et un niveau de gris prédéterminé à mettre en relation avec la densité de réflexion du pixel ;
des moyens d'entrée de données d'image (23) qui sont conçus pour entrer des données d'image représentant une image (I1) et contenant des niveaux de gris de tous les pixels dans l'image (I1) ; et
des moyens de conversion de densité de réflexion (48) qui sont conçus pour convertir les niveaux de gris des pixels dans les données d'image en densités de réflexion basées sur le contenu stocké dans les moyens de stockage de rapport (48),
les moyens de calcul de différence de densité de réflexion (48) utilisant des données d'image qui ont été converties en densités de réflexion à partir des niveaux de gris.

10. Appareil de traitement d'image de la revendication 4, dans lequel les moyens de correction (48) sont constitués par un appareil de correction d'image de la revendication 1.

11. Procédé pour corriger une image, comprenant l'étape qui consiste à
détecter (A1) une limite (B) entre plusieurs zones (RD1, RD2) composées de pixels qui présentent une densité de réflexion égale ou supérieure à une limite inférieure prédéterminée de différence de densité de réflexion, dans une image (I1) à traiter,
**caractérisé en ce qu'**il comprend l'étape qui consiste à échanger (A6) des densités de pixels entre deux zones d'objet d'échange (RE1, RE2) qui sont situées symétriquement par rapport à la limite (B) détectée, chacune des zones d'objet d'échange (RE1, RE2) ayant une largeur prédéterminée dont une extrémité est située au niveau de la limite (B).

12. Procédé de traitement d'image comprenant le procédé pour corriger une image selon la revendication 11, comprenant l'étape qui consiste à
calculer une différence de densité de réflexion (A4) entre des pixels voisins, dans une image (I1) à traiter,
**caractérisé en ce qu'**il comprend en outre l'étape qui consiste à
échanger (A6) les densités des pixels entre les deux zones d'objet d'échange (RE1, RE2) seulement sur un pixel dont la différence de densité de réflexion est égale ou supérieure à une limite inférieure prédéterminée, et à empêcher l'échange des densités des pixels entre deux zones d'objet d'échange sur un pixel dont la différence de densité de réflexion est inférieure à la limite inférieure,

la limite inférieure étant une valeur minimale de différences de densité de réflexion de pixels entre deux zones de pixels (RD1, RD2) dans lesquelles des faux contours peuvent être reconnus.

13. Support sur lequel est stocké un programme informatique de commande de correction d'image, dans lequel le programme informatique amène l'ordinateur à procéder à l'étape de détection d'une limite (B) entre plusieurs zones (RD1, RD2) composées de pixels dont la densité de réflexion est égale ou supérieure à une limite inférieure prédéterminée de différence de densité de réflexion, dans l'image (I1) à traiter,
**caractérisé en ce que** le programme informatique amène l'ordinateur à procéder à l'étape
d'échange de densités de pixels entre des zones d'objet d'échange (RE1, RE2) qui sont situées symétriquement par rapport à la limite (B) détectée, chacune des zones d'objet d'échange (RE1, RE2) ayant une largeur prédéterminée dont une extrémité se trouve au niveau de la limite (B).

14. Support sur lequel est stocké un programme informatique de commande de correction d'image comprenant un programme informatique de commande de correction d'image selon la revendication 13,
**caractérisé en ce que** le programme informatique amène l'ordinateur à procéder aux étapes qui consistent
à calculer une différence de densité de réflexion (A4) entre des pixels voisins, dans l'image (I1), et
à échanger des densités des pixels entre deux zones d'objet d'échange (RE1, RE2) seulement sur les pixels dont la différence de densité de réflexion est égale ou supérieure à une limite inférieure prédéterminée, et à empêcher l'échange des densités des pixels entre deux zones d'objet d'échange sur les pixels dont la différence de densité de réflexion est inférieure à la limite inférieure,
la limite inférieure étant une valeur minimale de différences de densité de réflexion de pixels entre deux zones de pixels (RD1, RD2) dans lesquelles des faux contours peuvent être reconnus.

# F I G. 1

# F I G. 2

EP 1 032 193 B1

# F I G. 3

RD1     B     RD2     I1

Y   X

L1   RE2   RE1   L2

# F I G. 4

RD3    RD5   RD6    RD4    I2

Y   X

L1   B   L2

# F I G. 5

# F I G. 6

# FIG. 7

# F I G. 8A

GRAY LEVEL   0   1  · · ·  m   n  · · ·  254  255

IT1

W2

Y
X

W1

# F I G. 8B

BLm          BLn

# F I G. 8C

BLm          BLn

# F I G. 8D

BLm          BLn

EP 1 032 193 B1

# F I G. 9

# F I G. 10

START (INPUT IMAGE DATA) — A0

DETECT BOUNDARY BETWEEN PIXEL REGIONS — A1

DETECT GRAY LEVELS OF ADJOINING PIXEL REGIONS — A2

CONVERT GRAY LEVELS INTO REFLECTION DENSITIES — A3

CALCULATE REFLECTION DENSITY DIFFERENCE ΔD — A4

$D \geqq 0.003$ ? — A5

NO $(0.003 > D)$

YES $(D \geqq 0.003)$

EXCHANGE BOUNDARY PIXELS — A6

END (OUTPUT IMAGE) — A7

# F I G. 11 PRIOR ART

3

5

4

**REFERENCES CITED IN THE DESCRIPTION**

**Patent documents cited in the description**

- JP 61194977 A